# FASCICULE DE BREVET EUROPEEN

(11) **EP 3 959 508 B1**
(45) Date de publication et mention de la délivrance du brevet: **31.12.2025**
(21) Numéro de dépôt: 20720073.4
(22) Date de dépôt: 24.04.2020
(51) Int. Cl.: G01N 21/45, G02B 27/54, G01M 11/02

(54) **SYSTEME DE MESURE PAR DEFLECTOMETRIE**
DEFLEKTOMETRISCHES MESSSYSTEM
DEFLECTOMETRIC MEASURING SYSTEM

(30) Priorité: 24.04.2019 BE 201905272
(43) Date de publication de la demande: 02.03.2022
(73) Titulaire: Lambda-X Ophthalmics, 1400 Nivelles (BE)
(72) Inventeur: ANTOINE, Philippe, 1457 WALHAIN (BE); BEGHUIN, Didier, 1540 HERNE (BE); JOANNES, Luc, 5030 GEMBLOUX (BE)
(74) Mandataire: Gevers Patents
(86) Numéro de dépôt international: PCT/EP2020/061480
(87) Numéro de publication internationale: WO 2020/216914

(56) Documents cités:
- WO-A2-03/048837
- JP-A- 2000 019 102
- US-A- 4 728 185
- LUC JOANNES ET AL: "Phase-shifting schlieren: high-resolution quantitative schlieren that uses the phase-shifting technique principle", APPLIED OPTICS, vol. 42, no. 25, 1 September 2003 (2003-09-01), WASHINGTON, DC; US, pages 5046, XP055655931, ISSN: 0003-6935, DOI: 10.1364/AO.42.005046
- THANH NGUYEN ET AL: "Non-Interferometric Tomography of Phase Objects Using Spatial Light Modulators", JOURNAL OF IMAGING, vol. 2, no. 4, 19 October 2016 (2016-10-19), pages 30, XP055658721, DOI: 10.3390/jimaging2040030
- BUCKNER BENJAMIN D ET AL: "Digital focusing schlieren imaging", VISUAL COMMUNICATIONS AND IMAGE PROCESSING; 20-1-2004 - 20-1-2004; SAN JOSE,, vol. 9576, 1 September 2015 (2015-09-01), pages 95760C - 95760C, XP060059813, ISBN: 978-1-62841-730-2, DOI: 10.1117/12.2189533

## Description

### Domaine technique

Selon un premier aspect, l'invention se rapporte à un système de mesure par déflectométrie.

### Etat de la technique

Dans l'industrie optique, il est important de caractériser des éléments optiques de manière précise, complète et si possible automatisée. En particulier, lors du développement ou de la production sur mesure de lentilles correctrices ou de lunettes présentant des courbures complexes, il est souhaité de pouvoir contrôler que chaque produit est conforme à des spécifications données.

Lorsqu'un objet réfractif est illuminé, le front d'onde le traversant est modifié en fonction de la forme et de l'indice de réfraction de l'objet. L'intensité de la lumière sera également affectée par les propriétés optiques de transmission de l'objet. De même, lorsque de la lumière est réfléchie, la forme de la surface réfléchissante de l'objet étudié affectera le front d'onde et l'intensité de la lumière renvoyée. Les caractéristiques optiques de l'objet réfractif ou réfléchissant peuvent ainsi être déterminées en mesurant les modifications du front d'onde et/ou de l'intensité d'un faisceau lumineux ayant interagi avec celui-ci.

Une méthode de mesure à décalage de phase est connue pour son application notamment en déflectométrie, en interférométrie, ou en profilométrie. La déflectométrie à décalage de phase est une méthode éprouvée pour la mesure des cartes de déviations de la lumière par une lentille ou par un miroir. La déflectométrie à décalage de phase demande l'acquisition de plusieurs images pour un même objet à mesurer. Une telle méthode peut être utilisée pour des mesures 'en temps réel' moyennant l'acquisition de plusieurs images pendant un intervalle de temps suffisamment court.

Les méthodes à décalage de phase sont également utilisées dans d'autres domaines que la caractérisation d'éléments optiques, tels que l'inspection de tranches de semi-conducteur, de panneaux de verre plat, de feuilles de plastique, etc. où la forme et/ou le fini de surface d'objets optiquement réfléchissants et/ou réfringents doivent être inspectés de manière précise et efficace.

EP 1 454 183 B1 décrit un système de mesure d'éléments optiques par déflectométrie. Le système de EP 1 454 183 B1 propose d'acquérir plusieurs images successives d'un même élément optique. Pour chaque image, il y a projection d'un motif sur l'objet à analyser de sorte que l'intensité du motif sur l'objet à analyser varie en fonction des angles d'incidence. Le système décrit dans EP 1 454 183 B1 montre des limitations en termes de vitesse d'acquisition des images et de précision de mesure. WO03/048837 A2 divulgue un système de mesure par déflectométrie comprenant des moyens de modulation optique matriciels.

### Résumé de l'invention

Selon un premier aspect, un des buts de la présente invention est de fournir un système de mesure par déflectométrie qui permet d'avoir une vitesse d'acquisition plus grande et une meilleure précision de mesure.

A cette fin, les inventeurs proposent un système de mesure par déflectométrie d'un échantillon comprenant :
- une source pour générer un faisceau lumineux en un plan source ;
- un module d'illumination comprenant :
   o un premier élément optique convergent ;
   o un premier élément optique de sélection présentant une première ouverture, le premier élément optique de sélection étant positionné entre le plan source et le premier élément optique convergent ;
- le module d'illumination étant configuré pour générer un faisceau d'illumination à partir du faisceau lumineux de la source ;
- des moyens de modulation optique matriciels en réflexion, pour former un motif à partir du faisceau d'illumination ;
   la première ouverture étant configurée pour contrôler des angles d'incidence du faisceau d'illumination sur les moyens de modulation optique matriciels en réflexion ;
- une lentille de Schlieren ;
   le système de mesure étant configuré de sorte que le motif est apte à illuminer la lentille de Schlieren de sorte à obtenir un codage angle-intensité du motif en un faisceau lumineux d'inspection ;
- des moyens d'imagerie pour former une image dudit échantillon après interaction dudit faisceau lumineux d'inspection avec ledit échantillon ;
des moyens de détection matriciels pour détecter l'image dudit échantillon formée par les moyens d'imagerie; **-** des moyens séparateurs de faisceau configurés de sorte à obtenir à partir dudit faisceau d'illumination issu du module d'illumination: un premier faisceau lumineux transmis ou dévié par ledit séparateur de faisceau le long d'un premier trajet optique dirigé vers lesdits moyens de modulation optique matriciels; un deuxième faisceau lumineux dévié ou respectivement transmis par ledit séparateur de faisceau le long d'un deuxième trajet optique issu d'une réflexion dudit premier faisceau lumineux transmis ou respectivement dévié par lesdits moyens de modulation optique matriciels; - un miroir non-plan positionné de sorte à réfléchir ledit deuxième faisceau lumineux, issu d'une réflexion sur lesdits moyens de modulation de phase matriciels, en un troisième faisceau lumineux réfléchi vers ledit séparateur de faisceau selon un troisième trajet optique de sorte que le troisième faisceau lumineux est réfléchi ou transmis par le séparateur de faisceau pour former un quatrième faisceau lumineux dirigé vers la lentille de Schlieren.

Le système de mesure par déflectométrie de l'invention permet d'améliorer la vitesse d'acquisition grâce à une augmentation de la luminosité du faisceau lumineux projeté sur l'objet à étudier par rapport à la solution de EP 1 454 183 B1. Le système de mesure par déflectométrie de l'invention permet aussi d'améliorer la vitesse d'acquisition grâce une vitesse plus élevée des moyens de modulation en réflexion. Le système de l'invention permet également d'obtenir une meilleure qualité de mesure grâce à un meilleur contrôle de l'intensité en fonction de l'angle du faisceau lumineux projeté sur l'objet à étudier.

Un avantage du système de l'invention est de permettre une bonne précision de mesure grâce au contrôle des lumières parasites. Le contrôle des lumières parasites et en particulier leur réduction, voire leur suppression est un paramètre critique car toute lumière parasite dégrade la qualité de l'image de l'objet étudié qui est enregistrée par les moyens de détection matriciels (caméra). Un mauvais contrôle des lumières parasites peut avoir des conséquences non négligeables suite au codage angle-intensité. En effet, toute erreur dans la mesure de l'intensité enregistrée (due à des lumières parasites par exemple) peut résulter en une erreur d'estimation de l'angle de réfraction ou de réflexion de l'échantillon. Un échantillon est un élément optique étudié ou un élément optique à mesurer. Une solution efficace est d'éclairer les moyens de modulation optique avec un faisceau lumineux dont les dimensions et la divergence sont contrôlées avec précision de façon à ne conserver que les rayons lumineux qui éclaireront le champ de vue utile de l'élément étudié et dont la direction est incluse dans l'acceptance angulaire du système de mesure optique par déflectométrie.

L'influence de lumières parasites est réduite avec le système de mesure de l'invention qui permet de générer un faisceau lumineux spatialement limité sur les moyens de modulation matriciels et qui comprend une première ouverture au niveau du premier élément optique de sélection, limitant la dimension du champ de vue éclairé par le faisceau d'inspection. La première ouverture correspond au diaphragme de champ du système de mesure par déflectométrie. Le système de mesure de l'invention permet d'imager la source de lumière étendue sur les moyens de modulation optique matriciels en réflexion. Cette configuration du système offre l'avantage que les angles d'incidence sur les moyens de modulation optique matriciels et donc les angles après réflexion sur les moyens de modulation optique matriciels sont limités par la première ouverture placée dans le module d'illumination, en amont du premier élément optique convergent.
Les moyens de modulation optique matriciels renvoient en direction de la lentille de Schlieren le faisceau généré par le module d'illumination en y intégrant un motif. Ainsi, le système de mesure de l'invention permet de réduire très fortement les lumières parasites, source de bruit sur la caméra, et donc de dégradation des performances du système de mesure.

Grâce au contrôle du champ de vue et de la divergence angulaire, le système de mesure de l'invention permet de limiter les lumières parasites. Autrement dit, la limitation des lumières parasites est obtenue par le contrôle du champ de vue et de la divergence angulaire. En particulier, le rapport entre la dimension de la première ouverture et la distance focale du premier élément optique convergent du module d'illumination permet de contrôler le champ de vue au niveau de l'objet à mesurer.

Ce contrôle des lumières parasites par le système de mesure de l'invention est particulièrement important car la mesure par déflectométrie repose sur une mesure de l'intensité qui code l'angle de réfraction ou de réflexion induit par un élément optique à mesurer. Lorsque l'objet à tester est mesuré, celui-ci dévie (par réfraction ou réflexion) un faisceau incident. Pour une mesure de tout l'objet à tester, la distribution angulaire du motif projeté doit inclure au moins tous les angles de déviation induits par l'objet à tester. Dans le but de réduire les lumières parasites, il est désiré d'avoir une distribution angulaire du motif projeté sur l'objet à tester qui soit minimale, c'est-à-dire qui soit ajustée à l'objet à tester. Par exemple, si l'objet à tester est une lentille présentant une déviation de 10° d'un faisceau incident, alors la distribution angulaire du motif projeté est limitée à 10°. Si une autre lentille présente une déviation de 20°, alors la distribution angulaire du motif projeté doit être adaptée en conséquence en augmentant la dimension du faisceau lumineux spatialement limité sur les moyens de modulation optique matriciels.
En effet, la mesure d'éléments optiques et en particulier les lentilles de contact ou les lentilles intraoculaires nécessitent : un grand champ de vue pour les lentilles de contact ou une grande acceptance angulaire pour les lentilles intraoculaires.

Le système de l'invention permet ainsi de limiter la génération de lumières parasites en éclairant les moyens de modulation optique matriciels avec un faisceau dont les dimensions sont contrôlées avec précision de façon à ne conserver que les rayons lumineux utiles. Les rayons lumineux utiles sont ceux qui illuminent le champ de vue de la zone à mesurer (de l'objet à mesurer) et dont la distribution angulaire correspond à l'objet à mesurer.

Le système de l'invention permet une augmentation de la luminosité du faisceau lumineux projeté par rapport à EP 1 454 183 B1. Ceci est en partie obtenu en diminuant les pertes de luminosité lors de la formation du motif projeté. Le système de l'invention propose en effet une formation du motif par des moyens de modulation optique matriciels en réflexion. En effet, des moyens de modulation optique, permettant de définir le motif à projeter, lorsqu'ils sont utilisés en transmission induisent des pertes significatives de luminosité. L'utilisation de moyens de modulation optique matriciels en réflexion, pour former le motif à projeter, permet une réduction significative des pertes lors de la génération du motif.

Le système de l'invention permet d'avoir une faible dépendance, voir une indépendance de l'intensité d'illumination en fonction de la direction de la lumière en aval des moyens de modulation optique par rapport à EP 1 454 183 B1. Si après interaction avec des moyens de modulation optique matriciels, la propagation du faisceau lumineux définissant le motif n'est pas isotrope, c'est-à-dire que l'intensité de la lumière dépend de sa direction, alors il en résultera une variation d'intensité qui induira une non-uniformité de codage angle-intensité et donc une erreur dans la mesure de l'angle de réfraction/réflexion de l'élément optique à mesurer. Cette caractéristique est particulièrement importante car la mesure par déflectométrie est une mesure basée sur une mesure de décalage d'angle qui nécessite la projection de plusieurs motifs et donc induisant (entre deux motifs projetés déphasés) une variation de l'intensité du motif localement. Or, un dispositif à cristaux liquides de projection par transmission tel que décrit dans EP 1 454 183 B1 montre une variation de l'intensité en fonction de l'angle avec lequel la lumière est transmise. Cela n'est pas le cas avec le système de mesure de l'invention qui utilise des moyens de modulation optique matriciels en réflexion, rendant ainsi le système de mesure plus précis. Autrement dit, dans le cas de moyens de modulation matriciels en transmission, ceux-ci souffrent d'un coefficient de transmission qui dépend de la direction de la lumière au niveau de ceux-ci. Il en résulte alors un codage angle-intensité qui n'est pas indépendant de la position dans le champ de vue. Cet effet parasite est inexistant avec les moyens de modulation matriciels en réflexion de l'invention.

Le système de mesure de l'invention est particulièrement précis car la lentille de Schlieren est configurée pour compenser les aberrations induites par les moyens de séparation de faisceau par exemple de sorte à avoir une incidence normale sur les moyens de modulation optique matriciels. De préférence, la paire lentille de Schlieren et cube séparateur polarisant sont configurés de sorte à ce qu'ils minimisent les aberrations globales. Par exemple la lentille de Schlieren est configurée de sorte à ce qu'elle minimise les aberrations introduites par le cube séparateur polarisant de sorte à minimiser les aberrations globales dans le système de mesure. La configuration de la lentille de Schlieren en fonction des aberrations introduites par le cube séparateur polarisant permet une amélioration de la précision de mesure du système de mesure de l'invention. Préférentiellement, la lentille de Schlieren est constituée d'une pluralité de lentilles réfractives. De préférence, la lentille de Schlieren est positionnée entre les moyens de modulation optique matriciels et les moyens d'imagerie le long d'un trajet optique d'un faisceau lumineux généré par la source lorsque cette dernière est activée. De manière plus préférée, les moyens de modulation optique matriciels sont positionnés dans un plan focal de la lentille de Schlieren en présence du cube séparateur polarisant.

De préférence, le premier élément optique de sélection présentant la première ouverture est positionné dans le plan focal objet du premier élément optique convergent. On pourrait appeler le premier élément optique convergent des premiers moyens optiques convergents, sans modifier la signification de cette caractéristique. Une formulation équivalente serait de dire que la première ouverture est configurée pour contrôler des angles d'incidence d'un faisceau issu dudit faisceau d'illumination sur les moyens de modulation optique matriciels en réflexion.

De préférence, les moyens de modulation optique matriciels sont positionnés dans un plan de modulation optiquement conjugué du plan source, le faisceau d'illumination étant spatialement limité au niveau des moyens de modulation optique matriciels en réflexion par au moins l'un des moyens suivants :
- un deuxième élément optique de sélection présentant une deuxième ouverture positionné dans le plan source ;
- un troisième élément optique de sélection présentant une troisième ouverture positionné dans le plan de modulation ;
- une source comprenant une source lumineuse spatialement limitée, de préférence la source lumineuse étant une matrice de diodes électroluminescentes (DEL).

Le faisceau d'illumination est spatialement limité au niveau desdits moyens de modulation optique matriciels signifie que le faisceau d'illumination illumine les moyens de modulation optique matriciels avec une dimension prédéfinie. La dimension du faisceau d'illumination est limitée dans le plan source ou dans le plan de modulation qui sont conjugués optiquement. L'avantage de limiter spatialement le faisceau d'illumination au niveau des moyens de modulation optique matriciels permet d'avoir une zone éclairée sur les moyens de modulation optique matriciels bien définie (limitée spatialement) par le faisceau lumineux spatialement limité. Les premier ou deuxième éléments optiques de sélection sont des diaphragmes d'ouverture du système de mesure par déflectométrie. Au sens de ce mode de réalisation, il devrait être compris qu'il existe une tolérance de positionnement lors de l'interprétation du terme optiquement conjugué et en particulier que lorsque le plan de modulation est optiquement conjugué du plan source, En effet, le système de l'invention fonctionne également lorsque le plan de modulation n'est pas strictement optiquement conjugué du plan source du fait de la possible tolérance de positionnement.

Les dimensions du faisceau lumineux spatialement limité sur les moyens de modulation optique matriciels permettent un contrôle de la distribution angulaire du motif projeté, définissant ainsi l'acceptance angulaire du système optique de l'invention. Il est important que la distribution angulaire du motif projeté soit cohérent avec les caractéristiques de la lentille de Schlieren.

De préférence, la source comprend un filtre pour filtrer spectralement le faisceau lumineux.

De préférence, lesdits moyens de modulation optique matriciels en réflexion sont positionnés dans un plan image du module d'illumination qui est conjugué dudit plan source. Par exemple, le plan image du module d'illumination coïncide avec le plan de modulation.

De préférence, ledit premier élément optique de sélection est positionné dans un plan focal objet du premier élément optique convergent.

Ce mode de réalisation permet l'acquisition par les moyens de détection matriciels d'une image d'un élément optique à mesurer avec des contours bien nets. Ce mode de réalisation préféré permet d'exploiter une image d'un élément optique à mesurer dans son entièreté. De préférence, le plan focal objet du premier élément optique convergent est la position où l'on contrôle le mieux les angles du faisceau d'illumination qui éclaire les moyens de modulation optique matriciels. Le but de positionner la première ouverture dans le plan focal objet est de contrôler les angles du faisceau d'illumination au niveau du plan de modulation. Ainsi, un décalage de la première ouverture de part et d'autre du plan focal objet du premier élément optique convergent devrait être compris comme étant dans le plan focal objet. Un tel décalage devrait être compris comme étant une tolérance de positionnement de ces différents éléments entre eux.

De préférence, le système de mesure comprend en outre :
- un troisième élément optique de sélection présentant une troisième ouverture, le troisième élément optique de sélection étant positionné au niveau des moyens de modulation optique matriciels.

De préférence, le module d'illumination est un module d'illumination 4F comprenant :
o un deuxième élément optique convergent positionné entre la source et le premier élément optique de sélection, et configuré de sorte que :
   ▪ son plan focal objet coïncide avec le plan source ;
   ▪ son plan focal image coïncide avec le plan focal objet du premier élément optique convergent positionné entre les premier et deuxième éléments optiques convergents,
le plan image du module d'illumination coïncide avec le plan focal image du premier élément optique convergent.

Préférentiellement, le premier et/ou le deuxième élément optique convergent comprend une première et une deuxième lentille convergente alignées distantes d'une distance comprise entre 0 mm et 10 mm.

De préférence, les moyens de modulation optique matriciels sont des moyens de modulation de phase matriciels.

L'avantage d'utiliser des moyens de modulation de phase matriciels est de permettre un angle de réflexion fixe (normale) du faisceau d'illumination sur les moyens de modulation de phase matriciels. Ceci permet de simplifier le design optique du système de mesure par déflectométrie de l'invention. L'utilisation de moyens de modulation de phase permet d'exploiter les propriétés de polarisation de la lumière.

De préférence, les moyens de modulation de phase matriciels comprennent une matrice de cristaux liquides sur silicium.

L'utilisation de moyens de modulation de phase de type matrice de cristaux liquides sur silicium (ou LCOS) est une solution efficace permettant grâce à l'ensemble du système de l'invention de répondre à l'ensemble des inconvénients de l'état de la technique précités : permet une meilleure intensité d'illumination et donc des temps d'exposition par image réduit ainsi qu'une meilleure précision de mesure grâce à la meilleure homogénéité des intensités du motif pour un angle d'incidence sur l'élément optique à mesurer. Une matrice de cristaux liquide sur silicium présente une grande rapidité des moyens de modulation, une grande rapidité signifie dans le cas présent, le laps de temps nécessaire pour changer un pixel entre l'absence de polarisation induite et une polarisation à 90°. Une matrice de cristaux liquide sur silicium permet également d'avoir des pertes minimales d'intensité lumineuse lors de la réflexion du faisceau sur la matrice de cristaux liquides sur silicium.

Afin de tirer pleinement partie de la matrice de cristaux liquides sur silicium, il désiré de l'utiliser avec un faisceau d'illumination incident (par exemple collimé) ayant une incidence perpendiculaire à sa surface, de sorte que le faisceau réfléchi soit également perpendiculaire à sa surface.

Ainsi, de préférence, le système de mesure de l'invention comprend en outre :
- des moyens séparateurs de faisceau configurés de sorte à obtenir à partir du faisceau d'illumination issu du module d'illumination :
   o un premier faisceau lumineux dévié par le séparateur de faisceau le long d'un premier trajet optique dirigé vers les moyens de modulation optique matriciels ;
   o un deuxième faisceau lumineux transmis par le séparateur de faisceau le long d'un deuxième trajet optique issu d'une réflexion du premier faisceau lumineux dévié par les moyens de modulation optique matriciels.

De préférence, les premier et deuxième trajets optiques sont parallèles.

De préférence, le système de mesure de l'invention comprend en outre :
- des moyens séparateurs de faisceau configurés de sorte à obtenir à partir du faisceau d'illumination issu du module d'illumination :
   o un premier faisceau lumineux transmis par le séparateur de faisceau le long d'un premier trajet optique dirigé vers les moyens de modulation optique matriciels ;
   o un deuxième faisceau lumineux dévié par le séparateur de faisceau le long d'un deuxième trajet optique issu d'une réflexion du premier faisceau lumineux transmis par les moyens de modulation optique matriciels.

De préférence, les premier et deuxième trajets optiques sont perpendiculaires.

Grâce aux moyens séparateurs de faisceau, il est possible de simplifier le design optique du dispositif de projection grâce à l'illumination perpendiculaire de la surface des moyens de modulation optique matriciels. Les moyens de séparation de faisceau permettent de projeter le motif en séparant les composantes du faisceau lumineux réfléchi ayant subi une modification de polarisation et celles n'ayant pas subi de modification de polarisation. Ainsi, les composantes qui définissent le motif sont celles ayant subi une modification de polarisation. Ces composantes sont donc dirigées dans une direction différente de celles n'ayant pas subi de modification de leur polarisation par les moyens de modulation optique matriciels. Dans le cas d'un LCOS, il est fortement recommandé d'utiliser un cube séparateur polarisant de sorte que le faisceau réfléchi par le LCOS soit filtré par le cube séparateur afin que seules les composantes du faisceau dont la polarisation a été modifié par le LCOS sont projetées.

Le mode de réalisation privilégié combinant un LCOS avec un cube polarisant permet de réduire les pertes de luminosité en exploitant les propriétés de polarisation de la lumière. En effet, cela permet de réduire significativement les pertes inévitables lors de la séparation des deux faisceaux : celles-ci sont supérieures à 75% avec une optique classique (non-polarisante) alors qu'elles peuvent ramenées à 50% avec un séparateur polarisant (par exemple cube séparateur de faisceau).

Les moyens séparateurs de faisceau pouvant être utilisés sont de manière non-exhaustive : lame semi-réfléchissante, lame séparatrice polarisante, lame orientée avec un angle de Brewster, cube séparateur polarisant...

De préférence, les moyens séparateurs de faisceau comprennent un séparateur de faisceau polarisant, par exemple un cube séparateur de faisceau polarisant.

De préférence, ledit séparateur de faisceau polarisant est configuré pour obtenir à partir dudit faisceau lumineux d'illumination (par exemple collimé) issu du module d'illumination :
- un premier faisceau lumineux dévié par ledit séparateur de faisceau polarisant le long d'un premier trajet optique et dirigé vers lesdits moyens de modulation de phase ;
- un deuxième faisceau lumineux transmis par le séparateur de faisceau polarisant le long d'un deuxième trajet optique issu d'une réflexion du premier faisceau lumineux dévié par les moyens de modulation de phase à deux dimensions.

De préférence, le faisceau d'illumination issu du module d'illumination est dirigé le long d'un axe optique A, le séparateur de faisceau polarisant est configuré de sorte que l'axe optique A est perpendiculaire au deuxième trajet optique.

De préférence, la source comprend une source lumineuse et un deuxième moyen de sélection présentant une deuxième ouverture pour limiter spatialement un faisceau lumineux issu de la source lumineuse.

De préférence, le deuxième moyen de sélection est positionné dans le plan source.

De préférence, la source comprend une source lumineuse spatialement limitée, par exemple la source lumineuse est une matrice de DEL.

De préférence, la source comprend une matrice de sources lumineuses, par exemple des DEL positionnées de sorte à générer un faisceau lumineux spatialement limité.

Le deuxième élément optique de sélection permet de limiter spatialement un faisceau lumineux généré par une ou plusieurs sources lumineuse.

Le positionnement du deuxième élément optique de sélection dans le plan source permet de pouvoir imager avec le module d'illumination, la deuxième ouverture sur les moyens de modulation optique matriciels.

De préférence, le faisceau lumineux est spatialement limité selon une aire de faisceau lumineux spatialement limité *S₁₀,* et, les moyens de modulation optique matriciels ont une aire de modulation optique *S₃₀* de sorte que : 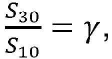 où γ est le facteur de grandissement du module d'illumination, de sorte que : 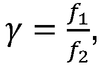 où *f₁* correspond à la distance focale du premier élément optique convergent et *f₂* correspond à la distance focale du deuxième élément optique convergent.

De préférence, la première ouverture a une aire de première ouverture inférieure à 50 mm², par exemple de 36 mm², de manière préférée inférieure à 25 mm² et de manière encore plus préférée inférieure à 10 mm². Selon un mode de réalisation préféré, la première ouverture est circulaire.

De préférence, la première ouverture est centrée sur l'axe optique A.

Par exemple, les moyens d'imagerie peuvent être un système dit 4F comprenant deux éléments optique convergent. Le premier élément optique convergent a une distance focale de 25 mm et le deuxième élément optique convergent a une distance focale de 25 mm. De préférence, les premier et/ou deuxième éléments optiques convergents comprennent chacun, une paire de lentille, chaque lentille ayant une distance focale de 50 mm. Les lentilles d'une paire de lentille sont de préférence séparées d'une distance comprise entre 0 mm et 10 mm, plus préférentiellement 1 mm. Par exemple, le grandissement du module d'illumination 4F est égal à 1.
De préférence, une matrice LCOS a une diagonale de 21 mm, de manière plus préférée, elle a un coté de dimension égale à 14 mm.

De préférence la première ouverture est un diaphragme. Par exemple la première ouverture à une section d'ouverture essentiellement circulaire, de sorte à limiter le champ de vue sur l'objet à tester de manière circulaire. Ceci est important afin de limiter les lumières parasites qui pourraient être créés en illuminant une portion d'un élément optique à mesurer dont on ne cherche pas à mesurer les propriétés optiques. Par exemple dans le cas de la mesure d'une lentille intraoculaire, il serait préférable de n'illuminer que la portion de la lentille ayant une fonction optique. Cependant, le système de mesure de l'invention permet une bonne visualisation des bords ou des haptiques d'une lentille intraoculaire. Il est donc préférable d'illuminer la portion ayant une fonction optique ainsi qu'une portion autour, par exemple si la portion ayant une fonction optique est un disque, il est préférable d'illuminer un anneau d'1 mm d'épaisseur autour du disque.

Il est par ailleurs particulièrement désiré d'avoir un dispositif de projection optique permettant de mesurer des objets (lentilles, miroirs ; réfractif, diffractifs) qui présentent une grande puissance optique.

Selon l'invention, le système de mesure de l'invention comprend en outre :
- un miroir non-plan positionné de sorte à réfléchir le deuxième faisceau lumineux, issu d'une réflexion sur les moyens de modulation de phase matriciels, en un troisième faisceau lumineux réfléchi vers ledit séparateur de faisceau selon un troisième trajet optique.

Dans cette configuration, les composantes du faisceau lumineux définissant le motif ne sont pas dirigées dans la direction de l'élément optique à mesurer après réflexion sur les moyens de modulation optique matriciels. En effet, les composantes du motif sont dirigées après réflexion sur les moyens de modulation, vers un miroir non-plan qui renvoie la lumière dans le cube séparateur. Une lame quart d'onde positionnée entre le miroir non-plan et le cube séparateur permet lors du retour du faisceau lumineux dans le cube, une réflexion dans le cube séparateur de faisceau, de sorte à diriger le motif vers la lentille de Schlieren et ainsi, en direction de l'élément à mesurer. Préférentiellement, la lentille de Schlieren est constituée d'une pluralité de lentilles réfractives. La combinaison lentille de Schlieren, moyen de séparation optique et miroir non-plan doit avoir de bonnes propriétés optiques. Par exemple, la lentille de Schlieren est configurée de sorte à ce qu'elle minimise les aberrations introduites par le cube séparateur polarisant ainsi que par le miroir non-plan de sorte à minimiser les aberrations globales dans le système de mesure. La configuration de la lentille de Schlieren en fonction des aberrations introduites par le cube séparateur polarisant ainsi que par le miroir non-plan permet une amélioration de la précision de mesure du système de mesure de l'invention. L'avantage de ce mode de réalisation, qui permet de générer de grands angles pour caractériser un élément optique à mesurer de forte puissance optique est que le double passage dans le cube séparateur de faisceau grâce à la réflexion sur le miroir non-plan permet d'obtenir de bonne propriétés optiques. Ainsi lors du design de la lentille de Schlieren, celle-ci doit être conçue de sorte à corriger les défauts introduits par le cube et le miroir non-plan. Plus préférentiellement, lors du design de la lentille de Schlieren, celle-ci doit être conçue de sorte à corriger en outre les défauts introduits par les lentilles réfractives et tout autre élément optique du système (par exemple un prisme...). Ici les défauts ne sont pas des défauts de fabrication des éléments optiques mais essentiellement des aberrations. De telles aberrations sont souvent liées à des défauts de forme : les faisceaux lumineux interagissant alternativement avec des surfaces planes (cube séparateur polarisant) et sphériques (lentilles, miroir non-plan, miroir concave). Il est à noter que les positions, les formes, les matériaux et les dimensions des lentilles réfractives qui composent la lentille de Schlieren sont donc choisis pour optimiser les performances globales de celle-ci. Une description fonctionnelle du système de mesure optique selon ce mode de réalisation indique que la fonctionnalité permettant d'obtenir un codage angle-intensité d'un motif d'illumination provient principalement du miroir non-plan et de la lentille de Schlieren. Il est possible de balancer la contribution à cette fonctionnalité entre le miroir non-plan et la lentille de Schlieren, par exemple en fonction de la distance focale du miroir non-plan choisie et de sa position.

Dans ce mode de réalisation, le cube séparateur est positionné entre les moyens de modulation de phase matriciels et le miroir non-plan. Dans une configuration préférée, le miroir non-plan est placé par rapport aux moyens de modulation de façon à créer une image de celui-ci à grande distance, par exemple à l'infini. Les lentilles réfractives de la lentille de Schlieren agissent de fait essentiellement comme un télescope qui permet d'adapter le diamètre et les angles d'incidence du faisceau à la dimension du champ de vue de l'instrument au niveau de la lentille à mesurer. Préférentiellement, le moyen de modulation est positionné au plan focal du miroir non-plan (concave) avec une tolérance de positionnement en présence du cube séparateur de faisceaux.

De façon avantageuse, le miroir non-plan est concave.
De préférence, le miroir non plan est un miroir concave ayant un rayon de courbure compris entre 25 mm et 100 mm, de manière préférée compris entre 25 mm et 75 mm, par exemple le miroir non-plan est un miroir concave sphérique ayant un rayon de courbure de 50 mm. Par exemple le miroir sphérique a un diamètre compris entre10 mm et 50 mm, par exemple un diamètre de 25,4 mm.

De façon avantageuse, le séparateur de faisceau est un séparateur de faisceau polarisant et le système de mesure de l'invention comprend en outre :
- une lame quart d'onde positionnée entre le miroir non-plan (convergent) et les moyens séparateurs de faisceau polarisant.

De préférence, le séparateur de faisceau lumineux polarisant est configuré de sorte que le troisième faisceau lumineux réfléchi par le miroir non-plan selon ledit troisième trajet optique) est dévié par le séparateur de faisceau polarisant en un quatrième faisceau lumineux selon un quatrième trajet optique.

De préférence, le séparateur de faisceau lumineux polarisant est configuré de sorte que le troisième faisceau lumineux réfléchi selon le troisième trajet optique est transmis par le séparateur de faisceau polarisant en un quatrième faisceau lumineux selon un quatrième trajet optique.

Dans ce mode de réalisation, les troisième et quatrième trajets optiques et les troisième et quatrième faisceaux lumineux sont confondus.

De préférence, le système de mesure de l'invention est configuré de sorte que :
- les deuxième et troisième trajets optiques sont essentiellement parallèles, et,
- l'axe optique A ou le faisceau d'illumination et le quatrième trajet optique sont essentiellement parallèle.

De préférence, la lentille de Schlieren est positionnée entre le dispositif de projection et les moyens d'imagerie.

De préférence, la lentille de Schlieren est positionnée entre ledit module d'illumination et les moyens d'imagerie. De manière préférée, la lentille de Schlieren est positionnée entre le cube séparateur de faisceau et les moyens d'imagerie.

La performance de la lentille de Schlieren est particulièrement critique car la lentille de Schlieren définit le codage de l'angle de réfraction de la lumière par l'élément optique à mesurer (l'angle de réflexion de la lumière par le miroir à mesurer) en intensité. Idéalement, ce codage est indépendant de la position dans le champ de vue. En d'autres termes, ce codage est le même pour toutes les positions sur l'élément optique à mesurer. Cette condition dépend de deux facteurs différents. Le premier est l'absence de distorsion. En pratique, un motif généré par les moyens de modulation optique matriciels et correspondant à un point source doit idéalement générer un faisceau collimé, c'est-à-dire un faisceau lumineux dont tous les rayons sont parallèles les uns par rapport aux autres. Ce faisceau peut être incliné par rapport à l'axe optique. Cette distorsion dégrade la performance de l'instrument ou rend sa calibration plus complexe En effet, le codage intensité dépend de la position dans le champ de vue et éventuellement de la distance de travail (distance lentille de Schlieren et élément optique à mesurer. Par ailleurs, toute aberration de la lentille de Schlieren se traduira par une perte en résolution angulaire. En effet, dans une vision simplifiée, la lumière collectée par chacun des pixels de l'image (image détectée par les moyens de détection matriciels) de l'élément optique à mesurer provient d'une position unique sur les moyens de modulation optique matriciels. À chaque pixel de l'image sur la caméra, la lumière vient d'une position sur le moyen de modulation optique matriciel. Cette position unique est en pratique une surface restreinte définie par la dimension de la quatrième ouverture des moyens d'imagerie (devant la caméra). La quatrième ouverture est par exemple un diaphragme. Les aberrations éventuelles de la lentille de Schlieren contribuent à étendre cette surface, ce qui dégrade la performance de l'instrument. La lentille de Schlieren est un objectif constitué de plusieurs lentilles dont la complexité dépend de façon critique à l'acceptance angulaire de l'instrument optique, de la dimension des moyens de modulation optique matriciels et de la dimension du champ de vue. Plus précisément, la complexité augmente pour des grands angles et des moyens de modulation optique matriciels de petite taille.

Lors de l'utilisation d'une matrice de cristaux liquides sur silicium en combinaison avec un cube séparateur polarisant, ce dernier introduit des aberrations optiques qui sont susceptible de détériorer significativement les performances de l'instrument. Le design de la lentille de Schlieren permet de compenser ces aberrations de sorte que les aberrations de la combinaison cube séparateur et lentille de Schlieren soient minimales. Lors du design de la lentille de Schlieren, les aberrations du cube séparateur de faisceau (et éventuellement du miroir non-plan) sont directement intégrées dans les éléments optiques modélisés de sorte à obtenir une lentille de Schlieren offrant une très bonne correction des aberrations introduites par le cube séparateur de faisceau.

La lentille de Schlieren est positionnée sur un trajet optique entre les moyens de modulation de phase matriciels et les moyens d'imagerie.

De préférence, les moyens d'imagerie comprennent :
o un premier et un deuxième éléments optiques d'imagerie convergents configurés de sorte qu'un foyer image de l'un coïncide avec un foyer objet de l'autre en un deuxième point de convergence situé dans un deuxième plan de focalisation positionné entre lesdits premier et deuxième éléments optiques d'imagerie convergents,
lesdits moyens d'imagerie étant apte à former une image de l'échantillon à partir du faisceau d'inspection ayant interagit avec l'échantillon sur les moyens de détection matriciels.

De préférence, les moyens d'imagerie comprennent en outre :
- un quatrième élément optique de sélection présentant une quatrième ouverture entourant le deuxième point de convergence.

Lors d'une mesure d'un élément optique en réflexion, il est préférable dans le cas d'un miroir concave par exemple, de mesurer celui-ci parallèlement à son axe optique. Ainsi, il est particulièrement avantageux de positionner l'élément optique à mesurer de sorte que son axe optique est parallèle au deuxième trajet optique du deuxième faisceau lumineux ayant interagit avec les moyens de modulation optique matriciels. Ainsi la lentille de Schlieren est positionnée entre l'élément à mesurer et les moyens séparateurs de faisceau de sorte que le faisceau lumineux réfléchi par l'élément optique à mesurer en réflexion repasse par la lentille de Schlieren. Une lame quart d'onde est alors positionnée entre l'élément optique à mesurer et les moyens séparateurs de faisceau polarisant de sorte que le faisceau lumineux réfléchi par l'élément optique à mesurer en réflexion est dévié par les moyens séparateur de faisceau polarisant en direction des moyens d'imagerie puis du détecteur optique matriciel (la lame quart d'onde peut se trouver entre le cube et la lentille de Schlieren ou entre la lentille de Schlieren et le miroir à tester). Dans ce cas, la lentille de Schlieren est à la fois la lentille de Schlieren en sens propre et le premier élément optique d'imagerie du système d'imagerie. Ceci est particulièrement avantageux et permet d'avoir un système de mesure particulièrement compact et avec un nombre de composants optiques réduit.

L'interaction du faisceau d'analyse avec l'élément optique à mesurer est une transmission du faisceau d'analyse avec l'échantillon dans le cas d'un échantillon réfractif ou diffractif ou une réflexion dans le cas d'un échantillon réfléchissant.

De préférence, la quatrième ouverture est positionnée au niveau du foyer image du premier élément optique d'imagerie et du foyer objet du deuxième élément optique d'imagerie de sorte à laisser essentiellement passer la portion du faisceau lumineux se propageant parallèlement à l'axe optique A.
De préférence, le quatrième élément optique de sélection présentant une quatrième ouverture est positionnée dans ledit deuxième plan de focalisation.

De préférence, la lentille de Schlieren est le premier élément optique d'imagerie, c'est-à-dire qu'elle remplace le premier élément optique d'imagerie le long d'un trajet optique du faisceau d'inspection après que celui-ci a interagit en réflexion avec l'échantillon. Ainsi la lentille de Schlieren permet le codage angle-intensité du faisceau d'inspection et permet d'obtenir une image grâce aux moyens d'imagerie dont elle fait également partie. La lentille de Schlieren remplie ici deux fonctions et permet ainsi la mesure d'un échantillon en réflexion avec une incidence normale (en son centre) à celui-ci.

De préférence, les moyens d'imagerie sont des moyens d'imagerie 4F de sorte que :
o le premier élément optique convergent est positionné entre la lentille de Schlieren et le quatrième moyen de sélection, de sorte que son plan focal objet coïncide avec un plan dudit échantillon et,
o le deuxième élément optique convergent est positionné entre le quatrième moyen de sélection et les moyens de détection matriciels, de sorte que son plan focal image coïncide avec les moyens de détection matriciels.

Les différents modes de réalisation du système de mesure optique de l'invention peuvent être mis en œuvre seuls ou en combinaison.

L'axe optique A dans le système optique de l'invention est considéré comme étant dévié lorsque le faisceau lumineux est dévié par des éléments réfléchissant.

### Brève description des figures

Ces aspects ainsi que d'autres aspects de l'invention seront clarifiés dans la description détaillée de modes de réalisation particuliers de l'invention, référence étant faite aux dessins des figures, dans lesquelles:
- la figure 1 montre une représentation schématique du système de mesure de l'invention ;
- les figures 2a, 2b 3a, 3b montrent des modes de réalisation n'entrant pas dans la portée de l'invention; les figures 4a, 4b montrent des modes de réalisation d'un dispositif de projection du système de mesure de l'invention ;
- la figure 3c montre un mode de réalisation de la source et du module d'illumination ;
- la figure 5 montre un mode de réalisation de la source ;
- la figure 6 montre un mode de réalisation des moyens de modulation optique matriciels ;
- les figures 7, 8a, 8b, 10a et 10b montrent des modes de réalisation du système de mesure n'entrant pas dans la portée de l'invention; la figure 9 montre un mode de réalisation du système de mesure de l'invention.
Les dessins des figures ne sont pas à l'échelle. Généralement, des éléments semblables sont dénotés par des références semblables dans les figures. La présence de numéros de référence aux dessins ne peut être considérée comme limitative, y compris lorsque ces numéros sont indiqués dans les revendications.

### Description détaillée de certains modes de réalisation de l'invention

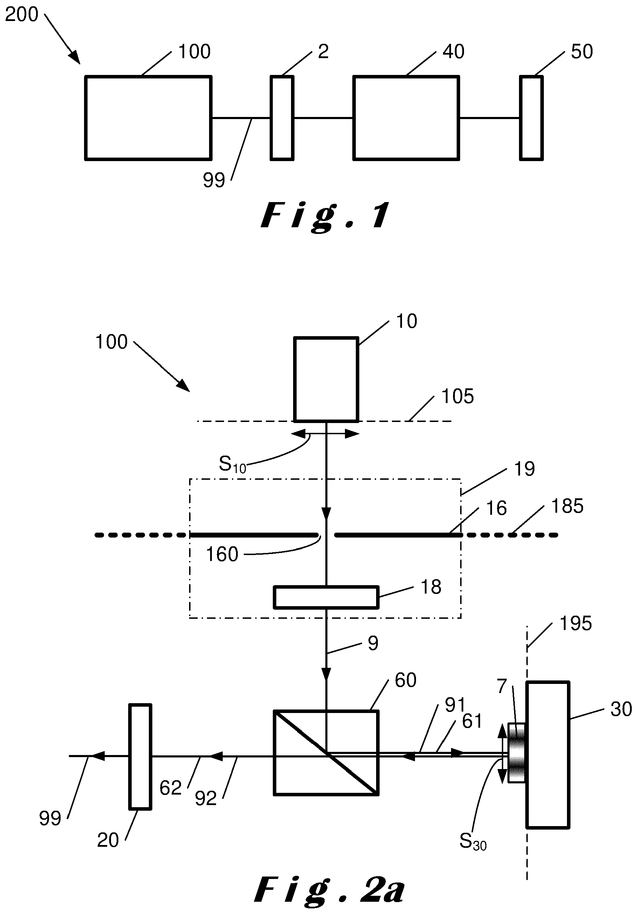

La figure 1 montre une représentation schématique du système de mesure par déflectométrie 200 de l'invention. Le système de mesure 200 comprend un dispositif de projection 100 permettant de projeter sur l'élément optique à mesurer 2, un motif dont l'angle d'incidence de ce motif sur l'élément optique à mesurer 2 est contrôlé avec précision par le dispositif de projection. Le système de mesure 200 comprend en outre des moyens d'imagerie 40 pour former une image de l'élément optique à mesurer 2 sur des moyens de détection matriciels 50.

La figure 2a montre un dispositif de projection 100 selon un exemple de réalisation n'entrant pas dans la portée de l'invention. Ce dispositif de projection 100 comprend une source 10 lumineuse spatialement limitée selon une surface de source lumineuse S₁₀. La source 10 est configurée pour émettre un faisceau lumineux dans le plan source 105. Selon un mode de réalisation préféré, la source 10 est configurée pour émettre un faisceau lumineux spatialement limité dans le plan source 105. Le dispositif de projection 100 comprend un module d'illumination 19 comprenant un premier moyen de sélection 16 présentant une première ouverture 160 et un premier élément optique 18 convergent. Selon un mode de réalisation préféré, la première ouverture 160 est positionnée dans le plan focal objet 185 du premier élément optique 18 convergent. La première ouverture 160 et le premier élément optique convergent sont positionnés de sorte à collecter une portion du faisceau lumineux spatialement limité. Le faisceau lumineux spatialement limité après son passage dans la première ouverture 160 et le premier élément optique convergent 18 est le faisceau d'illumination 9 qui est dirigé vers des moyens séparateurs de faisceau 60 pour le diriger ensuite vers des moyens de modulation optique matriciels 30 en réflexion avec une direction normale à la surface des moyens de modulation optique matriciels 30. Les moyens de modulation optique matriciels 30 présentent une surface de modulation optique S₃₀ illuminée, au moins en partie par le faisceau d'illumination 9 issu du passage du faisceau lumineux issu de la source 10 dans le module d'illumination 19. Le faisceau d'illumination 9 devient le premier faisceau lumineux 91 selon un premier trajet optique 61 après son passage dans les moyens de séparation 60 et est réfléchi en un deuxième faisceau lumineux 92 par les moyens de modulation optique matriciels 30 en réflexion selon une direction normale à ceux-ci selon un deuxième trajet optique 62. Les moyens séparateurs de faisceau 60 permettent de transmettre au moins une portion du faisceau lumineux réfléchi par les moyens de modulation optique matriciels 30 vers une lentille de Schlieren 20. Le faisceau réfléchi par les moyens de modulation optique matriciels 30 présente un motif 7 qui éclaire alors la lentille de Schlieren 20. La lentille de Schlieren 20, permet de projeter sur un élément optique à mesurer 2 un faisceau lumineux d'inspection 99 dont l'angle d'incidence varie en fonction d'un décalage du motif 7 lorsqu'il illumine la lentille de Schlieren 20.

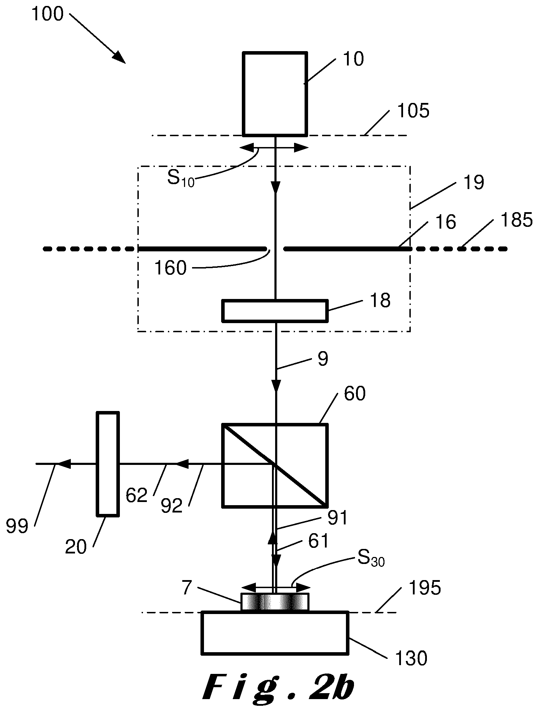

La figure 2b est un exemple de réalisation proche de celui de la figure 2a. Il diffère néanmoins en ce que les moyens de modulation optique matriciels 30 sont positionnés de sorte que lorsque le premier faisceau lumineux 91 selon un premier trajet optique 61 est réfléchi en un deuxième faisceau lumineux 92 par les moyens de modulation optique matriciels 30 en réflexion selon une direction normale à ceux-ci selon un deuxième trajet optique 62, les moyens de séparation de faisceau lumineux 60 sont configurés pour transmettre au moins une portion du premier faisceau lumineux 91 et de réfléchir au moins une portion du deuxième faisceau lumineux 92. Les moyens séparateurs de faisceau 60 permettent de réfléchir au moins une portion du faisceau lumineux réfléchi 92 par les moyens de modulation optique matriciels 30 vers une lentille de Schlieren 20. Le faisceau d'illumination 9 devient le premier faisceau lumineux 91 selon un premier trajet optique 61 après sa transmission dans les moyens de séparation 60.

Les moyens de modulation optique matriciel 30 en réflexion sont configurés pour réfléchir l'image de la source lumineuse 10 avec un motif 7 qui après son passage dans la lentille de Schlieren 20 permet d'obtenir un faisceau d'inspection pour un système de mesure par déflectométrie 200. Selon un mode de réalisation préféré, la source 10 est configurée pour émettre un faisceau lumineux spatialement limité dans le plan source 105. Le motif 7 ainsi formé par le dispositif de projection de l'invention 100 est créé par l'activation ou la non-activation point par point (pixel par pixel) des moyens de modulation optique matriciels 30 en réflexion. L'activation des moyens de modulation optique matriciels 30 en réflexion, permet par exemple une déviation spatiale, une modification de la phase, une modification d'un facteur de réflexion... La modulation peut donc être réalisée en intensité ou en phase pour éclairer la lentille de Schlieren 20 avec le motif 7. La modulation en phase nécessite un élément optique polarisant pour convertir la modulation en phase en une modulation en intensité, qui est indispensable dans le cas de l'application du dispositif de projection 100 pour une mesure par déflectométrie. Un élément optique polarisant est par exemple un polariseur. La modulation de phase engendre une modulation de la polarisation de la lumière qui est elle-même analysée par le polariseur.

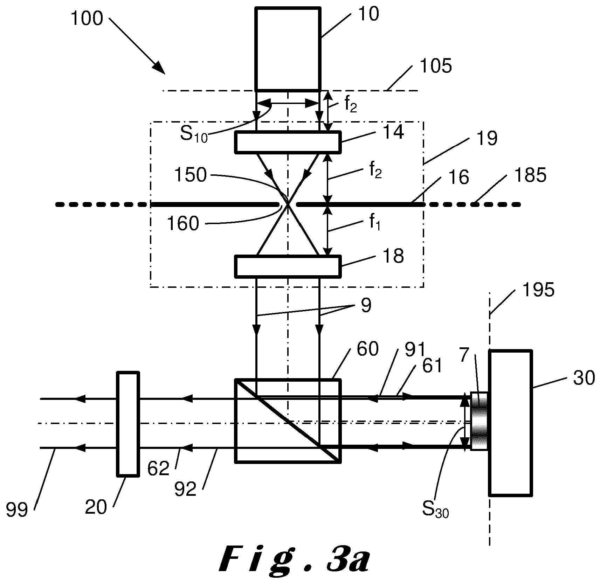

La figure 3a montre un autre exemple de réalisation du dispositif de projection n'entrant pas dans le cadre de l'invention. Le dispositif de projection 100 comprend une source 100 lumineuse spatialement limité selon une surface d'émission S₁₀. Le dispositif de projection 100 comprend un module d'illumination 19, qui est un système d'imagerie 4F, pour former une image de la source lumineuse spatialement limité 10 dans le plan source 105 sur les moyens de modulation optique matriciels 30. Le module d'illumination 19 comprend un premier 18 et un deuxième 14 éléments optiques convergents, par exemple des lentilles minces convergentes ou des paires de lentilles minces convergentes. Les premier 18 et deuxième 14 éléments optiques convergents sont positionnés de sorte que le plan focal image du deuxième élément optique 14 coïncide avec le plan focal objet du premier élément optique 18. Ainsi, selon un mode de réalisation préféré, grâce au module d'illumination 19, une image de la source 10 lumineuse est obtenue sur les moyens de modulation optique matriciels 30 en réflexion. Le dispositif de projection comprend en outre un premier élément optique de sélection 16 présentant une première ouverture 160. Cette première ouverture 160 est positionnée de sorte à entourer un point de convergence 150 correspondant à la coïncidence du foyer image du deuxième élément optique convergent 14 et du foyer objet du premier élément optique convergent 18. Ainsi, la première ouverture 160 permet de contrôler l'ouverture angulaire maximum (distribution angulaire maximum) (au niveau des moyens de modulation optique matriciels et pas au niveau de l'objet à tester) du faisceau lumineux généré par la source 10 qui présente une divergence/convergence trop grande. En effet, le faisceau lumineux issu de la source 10 est focalisé et seuls les faisceaux lumineux entrant parallèlement à l'axe optique du deuxième élément optique convergent 14 passent par son foyer image situé sur l'axe optique A. La deuxième ouverture 160 permet dès lors de limiter le passage des composantes du faisceau lumineux passant dans le premier élément optique convergent 18. Ainsi il est possible d'obtenir un faisceau d'illumination 9 collimé dont les composantes se propagent essentiellement parallèlement à l'axe optique A. La première ouverture 160 est formée dans le premier élément optique de sélection 16. La première ouverture 160 peut avoir une section circulaire, elliptique ou rectangulaire par exemple. La section de la première ouverture 160 a de préférence une aire inférieure à 10 mm², de manière préférée inférieure à 5 mm² et de manière encore plus préférée inférieure à 2 mm².

Le premier élément optique convergent 18 a une distance focale *f₁*. Le deuxième élément optique convergent 14 a une distance focale *f₂*.

En figure 3a, le dispositif 100 comprend des moyens séparateurs de faisceau 60 qui permettent d'illuminer les moyens de modulation optique 30 avec un angle choisi. Ici, les moyens séparateurs de faisceau 60 permettent d'illuminer les moyens de modulation optique 30 avec le faisceau d'illumination 9 (collimé de préférence) qui devient le premier faisceau lumineux 91 selon un premier trajet optique 61 décrivant un angle de 90° par rapport aux moyens de modulation de phase matriciels 30. Une portion du faisceau d'illumination 9 (collimé) est transmise par les moyens séparateurs de faisceau 60 (non représentée) et une portion est réfléchie vers les moyens de modulation optique 30. Dans un mode de réalisation privilégié, un polariseur est positionné entre la source 10 et les moyens séparateurs de faisceau 60 de sorte à bloquer la portion du faisceau d'illumination 9 qui serait transmise par les moyens séparateur 60. Ainsi, les moyens séparateurs de faisceau 60 sont configurés de sorte à obtenir à partir dudit faisceau d'illumination 9 (collimé), un premier faisceau lumineux 91 dévié par le séparateur de faisceau 60 le long d'un premier trajet optique 61 dirigé vers lesdits moyens de modulation optique matriciels 30. Le premier faisceau lumineux est réfléchi sur les moyens de modulation optique matriciels 30 en un deuxième faisceau lumineux 92. Le deuxième faisceau lumineux 92 est dirigé vers le séparateur de faisceau 60 où il est transmis au moins en partie par ledit séparateur de faisceau 60 le long d'un deuxième trajet optique 62.

La figure 3a, dans le cas de moyens séparateurs de faisceau 60 qui sont un cube polarisant, le faisceau d'illumination 9 qui devient le premier faisceau lumineux 91 lorsqu'il est dévié par le cube correspond à une polarisation du faisceau (collimé). La réflexion du premier faisceau lumineux 91 sur les moyens de modulation de phase matriciels 30 permet de modifier sélectivement la polarisation des portions du deuxième faisceau lumineux 92. De préférence, les moyens de modulation de phase matriciels 30 permettent de modifier la polarisation sélectivement avec un déphasage de 90° par rapport à la polarisation du premier faisceau lumineux 91. Ainsi, les portions du deuxième faisceau lumineux 92 ayant subi un déphasage de 90° sont transmis par le cube 60 alors que les portions du deuxième faisceau lumineux 92 n'ayant pas subi de déphasage sont réfléchis par le cube 60 (en direction de la source). De la sorte, un motif 7 peut illuminer la lentille de Schlieren et être projeté par le dispositif de projection 100 sur l'élément optique à mesurer 2 avec un codage angle-intensité pour une mesure par déflectométrie. Selon un mode de réalisation particulier, il est possible d'avoir une image non binaire en jouant sur la fraction du temps pendant laquelle la polarisation est modifiée.

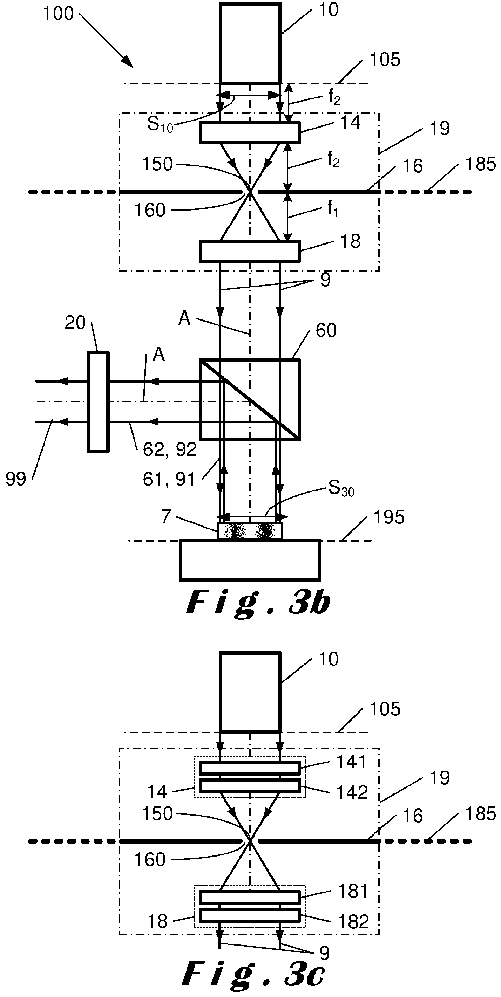

La figure 3b montre une variante de la figure 3a où les moyens de modulation de phase sont positionnés de sorte à être illuminé par la portion du faisceau (collimé) qui est transmise par le cube 60 plutôt que par la portion du faisceau (collimé) qui est réfléchie/déviée par le cube 60 (comme dans le cas de la Figure 3a). Ainsi les moyens de modulation de phase permettent d'induire un déphasage de 90° au faisceau d'illumination 9 qui devient le premier faisceau lumineux 91 de manière sélective de sorte à former un motif 7. Ainsi, les portions du deuxième faisceau lumineux 92 ayant subi ce déphasage de 90° sont réfléchies par le cube 60 alors que les portions (non représentées) n'ayant pas subi de déphasage sont transmises par le cube 60. Le motif 7 projeté sur la lentille de Schlieren 20 par le deuxième faisceau lumineux 92 après son passage dans le cube 60 (réflexion) peut donc être utilisé pour une mesure par déflectométrie.

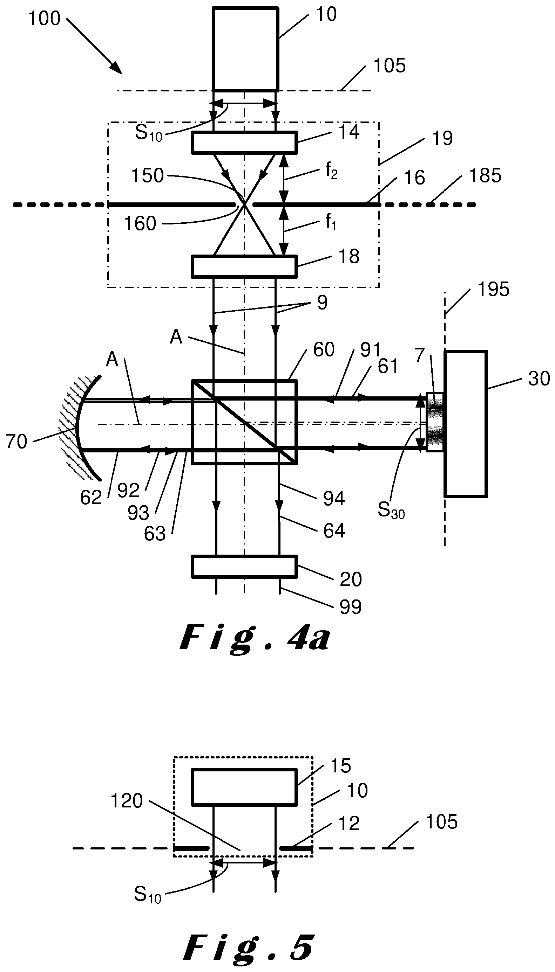

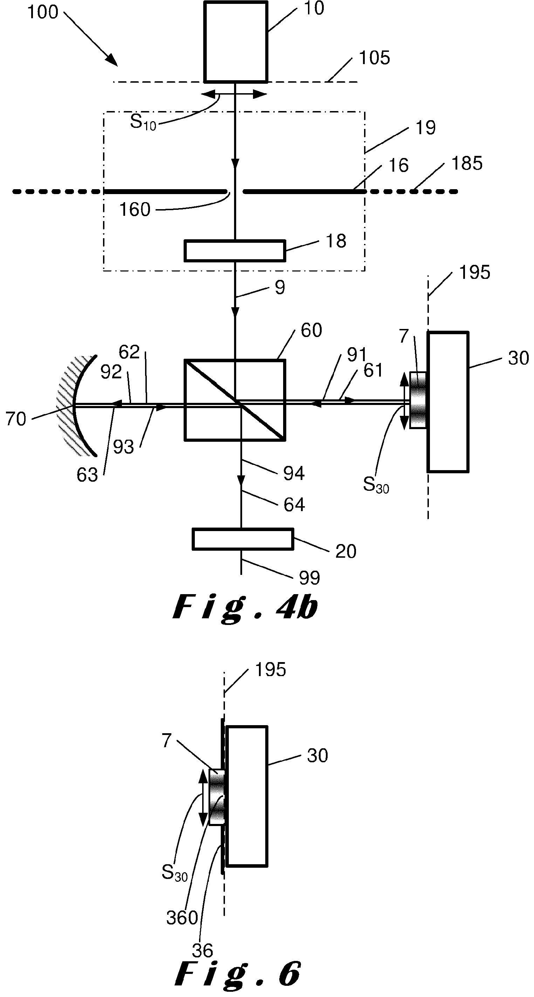

La Figure 3c montre un mode de réalisation du module d'illumination selon les Figures 3a, 3b, 4a et 4b. Dans ce mode de réalisation, les premier 18 et deuxième 14 élément optiques convergents comprennent chacun une paire de lentilles convergentes. Ce mode de réalisation permet d'utiliser des paires de lentilles disponibles commercialement et de les utiliser pour obtenir des distances focales plus courtes. Par exemple, les paires de lentilles 141, 142 ; 181, 182 comprennent deux lentilles 141, 142 ; 181, 182 de distance focale 50 mm, qui permettent d'obtenir des premier 18 et deuxième 14 éléments optiques convergents de distance focale 25 mm. Les lentilles 141, 142 ; 181, 182 de chaque paires étant par exemple distante de 1 mm l'une de l'autre.

La Figure 4a montre le dispositif de projection selon l'invention comprenant en outre un miroir non-plan 70 permettant de réfléchir le deuxième faisceau lumineux 92 en direction du cube 60, en un troisième faisceau lumineux 93 selon un troisième trajet optique 63. Selon un mode de réalisation préféré, un polariseur (non représenté est positionné entre le premier élément optique convergent 18 et les moyens séparateurs de faisceau 60 de sorte que toute l'intensité du faisceau lumineux d'illumination 9 dirigée vers les moyens séparateurs de faisceau 60 soit réfléchie vers les moyens de modulation optique matriciels 30. Le troisième faisceau lumineux 93 est alors réfléchi par le cube 60 en un quatrième faisceau lumineux 94 selon un quatrième trajet optique en direction d'un élément optique à mesurer 2. Une lame quart d'onde est positionnée entre le miroir non-plan 70 et le cube 60, de sorte que le deuxième faisceau 92 qui est transmis par le cube 60 puis réfléchit par le miroir non-plan 70 en un troisième faisceau 93 soit réfléchit par le cube 60 en un quatrième faisceau 94. En effet, le passage du deuxième puis du troisième faisceau 92, 93 à travers la lame quart d'onde permet de générer un déphasage de 90° au faisceau lumineux de sorte que sa direction soit déviée lorsqu'il repasse dans le cube 60 (avec des pertes en intensité négligeables). Le motif 7 généré par ce mode de réalisation est ensuite dirigé vers la lentille de Schlieren 20 et être projeté par le dispositif de projection 100 sur l'élément optique à mesurer 2 avec un codage angle-intensité pour une mesure par déflectométrie. Grâce à la réflexion sur le miroir non-plan, ce mode de réalisation permet de générer de grands angles lors du codage angle-intensité par la lentille de Schlieren 20, ce qui permet la mesure d'éléments optique à mesurer 2 ayant de petits rayons de courbure.

Le dispositif de la Figure 4a comprenant le miroir non-plan 70 et une lame quart d'onde peut être configuré à partir du dispositif 100 décrit en Figure 3b, en modifiant la position des éléments par rapport au cube 60. L'avantage de pouvoir modifier la position des éléments autour du cube 60 permet de rendre le dispositif adaptable à des applications différentes nécessitant des encombrements divers.

Le dispositif de la Figure 4b montre une combinaison de la figure 4a avec le module d'imagerie 19 de la Figure 2a.

La Figure 5 montre une source lumineuse spatialement limité 10 comprenant une source lumineuse 15 et un deuxième élément optique de sélection 12 présentant une deuxième ouverture 120. La deuxième ouverture 120 est formée dans le deuxième élément optique de sélection 12. Par exemple, la deuxième ouverture 120 a une section rectangulaire, carrée, elliptique ou circulaire. La deuxième ouverture 120 a une aire de deuxième ouverture S₁₂₀ qui correspond à l'aire de la portion évidée du deuxième élément optique de sélection 12. Le faisceau lumineux issu de la source lumineuse 15 est donc limité spatialement par le deuxième élément optique de sélection 12, de sorte à obtenir un faisceau lumineux spatialement limité apte à illuminer une surface selon un rectangle, une ellipse ou un cercle. Par exemple S₁₀ est supérieur à S₁₂₀. Le deuxième élément optique de sélection est positionné dans un plan source 105. L'utilisation de la source 10 de la figure 5 dans un dispositif de projection des figures 2a, 2b, 3a, 3b, 3c, 4 permet, grâce au positionnement des premier 16 et deuxième 12 éléments optiques de sélection par rapport au module d'illumination 19, d'obtenir une illumination des moyens de modulation optique 30 bien contrôlée, c'est-à-dire une illumination avec un faisceau lumineux dont les dimensions ne dépassent pas les dimensions de la portion active des moyens de modulation optique matriciels 30 en réflexion ou de la zone utile pour définir la distribution angulaire maximale souhaitée. La portion active des moyens de modulation optique matriciels 30 en réflexion est par exemple une matrice de cristaux liquide sur un substrat semi-conducteur. En plus du contrôle spatial du faisceau illuminant les moyens de modulation optique matriciel 30 en réflexion, la première ouverture 160 permet de contrôler les angles d'incidence du faisceau sur les moyens de modulation optique matriciel 30 en réflexion et donc les angles après réflexion.

La figure 6 montre un mode de réalisation des moyens de modulation optique matriciels 30 comprenant des troisième moyens de sélection 36 présentant une troisième ouverture 360. La troisième ouverture 360 est positionnée dans le plan 195 des moyens de modulation optique matriciels 30, de sorte à limiter spatialement le faisceau lumineux réfléchi par les moyens de modulation optique matriciels 30. Les moyens de modulation optique matriciels 30 de la figure 6 peuvent être adaptés à tous les modes de réalisation du système de mesure 200 de la présente invention.

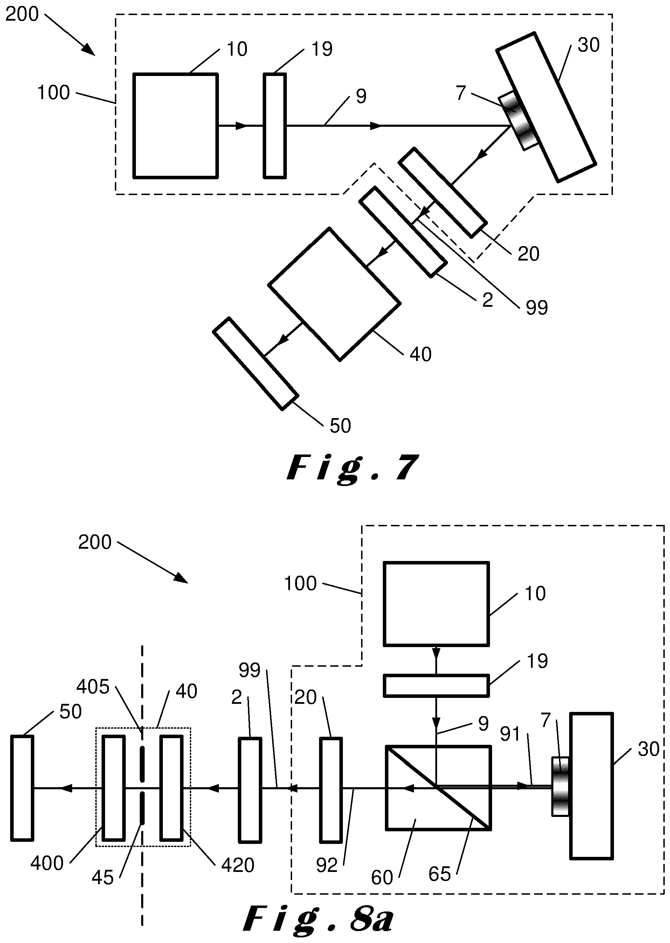

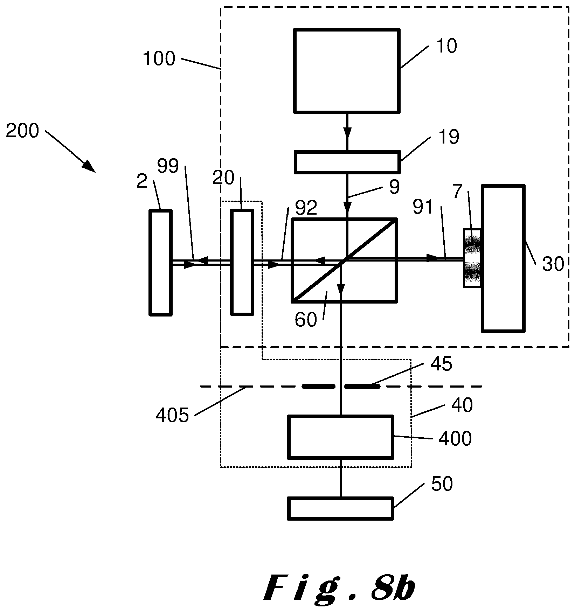

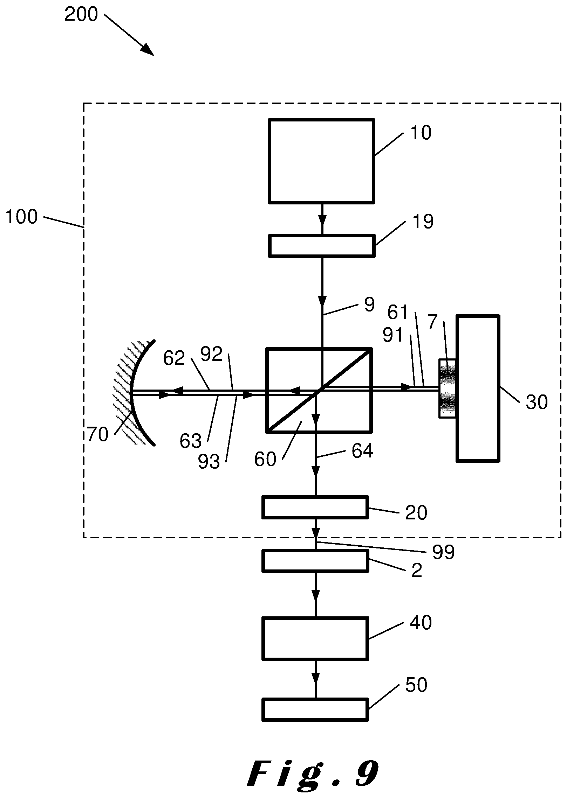

Les figures 7, 8a, 8b illustrent plusieurs modes de réalisation du système de mesure par déflectométrie 200 selon des exemples n'entrant pas dans la portée de l'invention. La figure 9 montre un mode de réalisation selon l'invention.

La figure 7 illustre un mode de réalisation du système de mesure par déflectométrie 200. Le système de mesure 200 comprend le dispositif de projection 100 qui permet de projeter le motif 7 après son passage dans la lentille de Schlieren 20 en direction de l'élément optique à mesurer 2. Puis une image de l'élément à mesurer 2 est formée sur les moyens de détection matriciels 50 grâce aux moyens d'imagerie 40. Les moyens de modulation optique matriciels et les moyens d'imagerie matriciels sont synchronisés de sorte qu'une image soit acquise pour chaque projection de motif 7. Pour chaque image acquise successivement, le motif 7 est déphasé sur la lentille de Schlieren 20 par rapport à l'image précédente, de sorte à obtenir une variation des angles du motif 7 sur l'élément optique à mesurer 2. Le module d'illumination 19 correspond à l'un des modules d'illumination 19 représenté et décrit en Figures 2a, 2b, 3a, 3b, 3c, *mutatis mutandis.*

La cadence de mesure d'un élément optique à mesurer 2 est en partie définie par la vitesse des moyens de modulation optique 30. Une option possible pour atteindre des vitesses plus élevées est d'afficher un motif 7 binaire et non un motif 7 sinusoïdal. En effet, le motif 7 binaire se transformera en un motif 7 proche d'une sinusoïde après convolution avec la réponse de l'élément bloquant 45. Il est à noter que cette conversion n'est jamais parfaite. Aussi, le gain en rapidité se traduit par une perte en performance optique en général et en résolution angulaire en particulier. Il est aussi possible de générer une image non binaire sur les moyens de détection matriciels 50 avec un motif 7 binaire en jouant sur le temps pendant lequel le motif 7 est affiché par les moyens de modulation optique matriciels 30. Cela est possible à condition que ledit temps soit plus court que le temps d'intégration utilisé par les moyens de détection matriciels 50 et que les moyens de détection matriciels 50 et les moyens de modulation optique matriciels 30 soient synchronisés. En l'absence d'échantillon à mesurer 2 dans le système 200, le deuxième plan de focalisation 405 est conjugué au plan image (ou plan de modulation) 195 avec des possibles tolérances de positionnement.

La figure 8a montre un mode de réalisation du système de mesure 200 comprenant en plus du mode de réalisation de la figure 7, un cube séparateur de faisceau polarisant 60 positionné entre la lentille de Schlieren 20 et les moyens de modulation de phase 30, de sorte que les composantes du deuxième faisceau lumineux 92 ayant subi une modulation de phase lors de la réflexion du premier faisceau lumineux 91 sur les moyens de modulation de phase 30 sont transmises par le cube 60 selon le deuxième trajet optique 62. Il est possible d'implémenter le mode de réalisation du dispositif de projection 100 de la figure 3b dans lequel, le cube séparateur de faisceau 60 est positionné entre le module d'illumination 19 et les moyens de modulation de phase 30, de sorte que les composantes du deuxième faisceau lumineux 92 ayant subi une modulation de phase lors de la réflexion du premier faisceau lumineux 91 sur les moyens de modulation de phase 30 sont réfléchies par le cube 60 selon le deuxième trajet optique 62.

La figure 8b montre un mode de réalisation du système de mesure 200 pour la mesure d'éléments optiques 2 en réflexion. Le système de mesure 200 comprend le dispositif de projection 100 configuré pour projeter le motif 7 sur l'élément optique à mesurer 2. Le dispositif de projection 100 comprend le cube séparateur 60 permettant de former le motif 7 à partir du faisceau réfléchi sur les moyens de modulation de phase matriciels 30. Le motif 7 est projeté à travers la lentille de Schlieren 20 jusqu'à l'élément optique à mesurer 2 sur lequel il est réfléchi pour repasser à travers la lentille de Schlieren 20 en direction du cube 60. Le motif 7 est alors dirigé par le cube 60 en direction des moyens de détection matriciels 50. Une image de l'élément optique à mesurer en réflexion 2 est alors formée sur les moyens de détection matriciels 50 grâce aux moyens d'imagerie 40 utilisant la lentille de Schlieren 20 en combinaison avec un deuxième élément optique d'imagerie 400. Une lame quart d'onde non représentée positionnée entre l'élément optique 2 et le cube polarisant 60 permet la réflexion par le cube 60 du faisceau lumineux réfléchi par l'élément optique 2. Ce mode de réalisation est particulièrement compact car il utilise le même cube polarisant 60 pour la formation du motif 7 en combinaison avec les moyens de modulation de phase 60 en réflexion en jouant le rôle d'analyseur puis en permettant de réaliser une mesure d'un élément 2 en réflexion en permettant avec une lame quart d'onde, une mesure avec un faisceau lumineux perpendiculaire à l'axe optique de l'élément à mesurer 2.

La figure 9 montre un mode de réalisation du système de mesure 200 comprenant le dispositif de projection 100 de la figure 4a ou 4b. De préférence, un polariseur (non-représenté) est positionné entre le module d'illumination 19 et les moyens séparateurs de faisceau 60 afin d'éviter que toute la lumière du faisceau d'illumination soit directement transmise par les moyens de séparation de faisceau lumineux 60. Le quatrième faisceau lumineux 94 définissant le motif 7 passe par la lentille de Schlieren 20 pour coder l'angle du faisceau d'inspection 99 en fonction de l'intensité du motif. Le faisceau d'inspection est de préférence projeté par le dispositif de projection 100 selon le quatrième trajet optique 64 l'élément optique à mesurer 2. Une image de l'élément optique à mesurer est formée sur les moyens de détection matriciels 50 grâce aux moyens d'imagerie 40. Ce mode de réalisation est particulièrement bien adapté à des mesures d'éléments optiques 2 ayant une grande puissance optique, par exemple supérieur à 20 D et encore plus adapté pour des puissances optiques supérieures à 25 D. Des éléments optiques 2 ayant une grande puissance optique sont par exemple des lentilles intraoculaires.

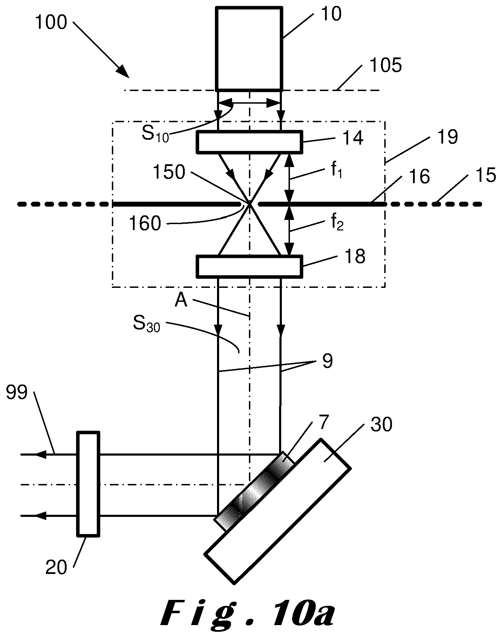

La figure 10a montre un exemple du dispositif de projection 100 semblable à celui des figures 3a et 3b mais ne nécessitant pas de moyens séparateurs de faisceau.

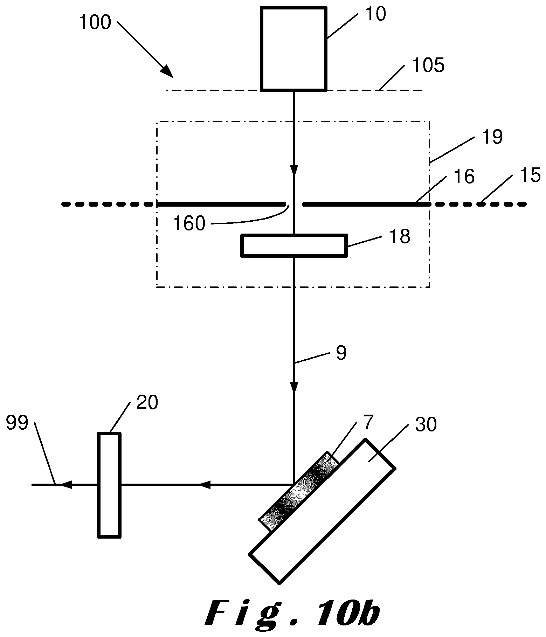

La figure 10b montre un exemple du dispositif de projection 100 semblable à celui des figures 2a et 2b mais ne nécessitant pas de moyens séparateurs de faisceau. Les dispositifs de projection 100 des figures 10a et 10b peuvent être utilisés dans les modes de réalisation des systèmes de mesure par déflectométrie des figures 7, 8a, 8b, 9, et en particulier avec celui de la figure 7.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée. La portée de l'invention n'est limitée que par les revendications annexées.

## Revendications

1. Système de mesure (200) par déflectométrie d'un échantillon (2) comprenant :
- une source (10) pour générer un faisceau lumineux en un plan source (105) ;
- un module d'illumination (19) comprenant :
∘ un premier élément optique convergent (18) ;
∘ un premier élément optique de sélection (16) présentant une première ouverture (160), ledit premier élément optique de sélection (16) étant positionné entre ledit plan source (105) et ledit premier élément optique convergent (18);
ledit module d'illumination (19) étant configuré pour générer un faisceau d'illumination (9) à partir dudit faisceau lumineux de ladite source (10) ;
- des moyens de modulation optique matriciels (30) en réflexion, pour former un motif (7) à partir dudit faisceau d'illumination (9) ;
ladite première ouverture (160) étant configurée pour contrôler des angles d'incidence dudit faisceau d'illumination (9) sur lesdits moyens de modulation optique matriciels (30) en réflexion ;
- une lentille de Schlieren (20) ;
ledit système de mesure (200) étant configuré de sorte que ledit motif (7) est apte à illuminer ladite lentille de Schlieren (20) de sorte à obtenir un codage angle-intensité dudit motif (7) en un faisceau lumineux d'inspection (99) ;
- des moyens d'imagerie (40) pour former une image dudit échantillon (2) après interaction dudit faisceau lumineux d'inspection (99) avec ledit échantillon (2), ladite lentille de Schlieren (20) étant positionnée entre lesdits moyens de modulation optique matriciels (30) et lesdits moyens d'imagerie (40) le long d'un trajet optique d'un faisceau lumineux généré par ladite source (10) lorsque cette dernière est activée;
- des moyens de détection matriciels (50) pour détecter ladite image dudit échantillon (2) formée par lesdits moyens d'imagerie (40) ;
- des moyens séparateurs de faisceau (60) configurés de sorte à obtenir à partir dudit faisceau d'illumination (9) issu du module d'illumination (19) :
∘un premier faisceau lumineux (91 ) transmis ou dévié par ledit séparateur de faisceau (60) le long d'un premier trajet optique (61 ) dirigé vers lesdits moyens de modulation optique matriciels (30) ;
∘un deuxième faisceau lumineux (92) dévié ou respectivement transmis par ledit séparateur de faisceau (60) le long d'un deuxième trajet optique (62) issu d'une réflexion dudit premier faisceau lumineux (91 ) transmis ou respectivement dévié par lesdits moyens de modulation optique matriciels (30);
- un miroir non-plan (70) positionné de sorte à réfléchir ledit deuxième faisceau lumineux (92), issu d'une réflexion sur lesdits moyens de modulation de phase matriciels (30), en un troisième faisceau lumineux (93) réfléchi vers ledit séparateur de faisceau (60) selon un troisième trajet optique (63) de sorte que le troisième faisceau lumineux est réfléchi ou transmis par le séparateur de faisceau pour former un quatrième faisceau lumineux (94) dirigé vers la lentille de Schlieren (20).

2. Système de mesure (200) selon la revendication précédente **caractérisé en ce que** lesdits moyens de modulation optique matriciels (30) sont positionnés dans un plan de modulation (195) optiquement conjugué dudit plan source (105), ledit faisceau d'illumination (9) étant spatialement limité au niveau desdits moyens de modulation optique matriciels (30) en réflexion par au moins l'un des moyens suivants :
- un deuxième élément optique de sélection (12) présentant une deuxième ouverture (120), positionné dans ledit plan source (105) ;
- un troisième élément optique de sélection (36) présentant une troisième ouverture (360), positionné dans ledit plan de modulation (195) ;
- une source (10) comprenant une source lumineuse (15) spatialement limitée, de préférence ladite source lumineuse (15) étant une matrice de diodes électroluminescentes.

3. Système de mesure (200) selon l'une quelconque des revendications précédentes **caractérisé en ce que** ledit premier élément optique de sélection (16) est positionné dans un plan focal objet (185) dudit premier élément optique convergent (18).

4. Système de mesure (200) selon l'une quelconque des revendications précédentes **caractérisé en ce qu'**il comprend en outre :
- un troisième élément optique de sélection (36) présentant une troisième ouverture (360), ledit troisième élément optique de sélection (36) étant positionné au niveau desdits moyens de modulation optique matriciels (30).

5. Système de mesure (200) selon l'une quelconque des revendications précédentes **caractérisé en ce que** :
- ledit module d'illumination (19) est un module d'illumination 4F comprenant :
o un deuxième élément optique (14) convergent positionné entre ladite source (10) et ledit premier élément optique de sélection (16), et configuré de sorte que :
▪ son plan focal objet coïncide avec ledit plan source (105) ;
▪ son plan focal image coïncide avec ledit plan focal objet (185) dudit premier élément optique (18) convergent positionné entre lesdits premier (18) et deuxième (14) éléments optiques convergents,
ledit plan image du module d'illumination (19) coïncide avec le plan focal image du premier élément optique (18) convergent.

6. Système de mesure (200) selon l'une quelconque des revendications précédentes **caractérisé en ce que** lesdits moyens de modulation optique matriciels (30) sont des moyens de modulation de phase matriciels (30), comprenant de préférence une matrice de cristaux liquides sur silicium.

7. Système de mesure (200) selon l'une quelconque des revendications précédentes **caractérisé en ce que**
lesdits premier (61) et deuxième (62) trajets optiques étant parallèles,
lorsque ledit premier faisceau lumineux (91) est dévié par ledit séparateur de faisceau (60).

8. Système de mesure (200) selon l'une quelconque des revendications 1 à 6 **caractérisé en ce que**:
lesdits premier (61) et deuxième (62) trajets optiques étant perpendiculaires, lorsque ledit premier faisceau lumineux (91) est transmis par ledit séparateur de faisceau (60)

9. Système de mesure (200) selon l'une quelconque des deux revendications précédentes lorsqu'il dépend de la revendication 6 **caractérisé en ce que** :
- les moyens séparateurs de faisceau (60) comprennent un séparateur de faisceau polarisant (60), de préférence un cube séparateur de faisceau polarisant (60),
ledit faisceau d'illumination (9) issu dudit module d'illumination (19) est dirigé le long d'un axe optique A, ledit séparateur de faisceau polarisant (60) étant de préférence configuré de sorte que l'axe optique A est perpendiculaire audit deuxième trajet optique (62).

10. Système de mesure (200) selon l'une quelconque des revendications précédentes **caractérisé en ce que** ladite source (10) comprend une source lumineuse (15) et un deuxième moyen de sélection (12) présentant une deuxième ouverture (120) pour limiter spatialement un faisceau lumineux issu de ladite source lumineuse (15), ledit deuxième moyen de sélection (12) étant de préférence positionné dans ledit plan source (105).

11. Système de mesure (200) selon l'une quelconque des revendications précédentes **caractérisé en ce que** :
- ladite première ouverture (16) a une aire de première ouverture (160) inférieure à 50 mm², de préférence inférieure à 25 mm² et de manière encore plus préférée inférieure à 10 mm²,
ladite première ouverture (160) étant centrée de préférence sur ledit axe optique A.

12. Système de mesure (200) selon l'une quelconque des revendications précédentes **caractérisé en ce que** ladite lentille de Schlieren (20) est positionnée entre ledit dispositif de projection (100) et lesdits moyens d'imagerie (40) ou entre lesdits moyens de modulation de phase matriciels (30) et lesdits moyens d'imagerie (40).

13. Système de mesure (200) selon l'une quelconque des revendications précédentes **caractérisé en ce que** lesdits moyens d'imagerie (40) :
o comprennent un premier 420) et un deuxième (400) éléments optiques d'imagerie convergents configurés de sorte qu'un foyer image de l'un coïncide avec un foyer objet de l'autre en un deuxième point de convergence situé dans un deuxième plan de focalisation (405) positionné entre lesdits premier 420) et deuxième (400) éléments optiques d'imagerie convergents ;
o comprennent en outre de préférence un quatrième élément optique de sélection (45) présentant une quatrième ouverture entourant ledit deuxième point de convergence.
lesdits moyens d'imagerie (40) étant apte à former une image dudit échantillon (2) à partir dudit faisceau d'inspection (99) ayant interagit avec ledit échantillon (2) sur lesdits moyens de détection matriciels (50).

14. Système de mesure selon l'une quelconque des revendications précédentes **caractérisé en ce que** lesdits moyens d'imagerie (40) sont des moyens d'imagerie 4F de sorte que :
o ledit premier élément optique (420) convergent est positionné entre ladite lentille de Schlieren (20) et ledit quatrième moyen de sélection (45), de sorte que son plan focal objet coïncide avec un plan dudit échantillon (2) et,
o ledit deuxième élément optique (400) convergent est positionné entre ledit quatrième moyen de sélection (45) et lesdits moyens de détection matriciels (50), de sorte que son plan focal image coïncide avec lesdits moyens de détection matriciels (50).

## Patentansprüche

1. System (200) zur deflektometrischen Messung einer Probe (2), umfassend:
- eine Quelle (10) zum Erzeugen eines Lichtstrahls in einer Quellenebene (105);
- ein Beleuchtungsmodul (19), umfassend:
- ein erstes konvergentes optisches Element (18);
- ein erstes optisches Auswahlelement (16) mit einer ersten Öffnung (160), wobei das besagte erste optische Auswahlelement (16) zwischen der Quellenebene (105) und dem besagten ersten konvergenten optischen Element (18) positioniert ist;
wobei das besagte Beleuchtungsmodul (19) konfiguriert ist, um einen Beleuchtungsstrahl (9) aus dem besagten Lichtstrahl von der besagten Quelle (10) zu erzeugen;
- matrixförmige optische Modulationsmittel (30) in Reflexion, um aus dem besagten Beleuchtungsstrahl (9) ein Motiv (7) zu bilden;
wobei die besagte erste Öffnung (160) konfiguriert ist, um Einfallswinkel des besagten Beleuchtungsstrahls (9) auf die besagten matrixförmigen optischen Modulationsmittel (30) in Reflexion zu steuern;
- eine Schlierenlinse (20);
wobei das besagte System (200) so konfiguriert ist, das besagte Motiv (7) die Schlierenlinse (20) so beleuchten kann, dass eine Kodierung des Winkels und der Intensität des besagten Motivs (7) in einem Inspektionslichtstrahl (99) erhalten wird;
- Abbildungsmittel (40) zum Bilden eines Bildes der besagten Probe (2) nach einer Wechselwirkung des besagten Inspektionslichtstrahls (99) mit der besagten Probe (2), wobei die besagte Schlierenlinse (20) zwischen den besagten matrixförmigen optischen Modulationsmitteln (30) und den besagten Abbildungsmitteln (40) entlang eines Strahlengangs eines von der besagten Quelle (10) erzeugten Lichtstrahls positioniert ist, wenn diese aktiviert ist;
- matrixförmige Erfassungsmittel (50) zum Erfassen des besagten Bildes der besagten Probe (2), gebildet durch die besagten Abbildungsmittel (40);
- einen Strahlteiler (60), der so konfiguriert ist, dass aus dem besagten Beleuchtungsstrahl (9), stammend von dem besagten Beleuchtungsmodul (19), erhalten werden:
- ein erster Lichtstrahl (91), der durch den besagten Strahlteiler (60) transmittiert oder abgelenkt wird, entlang eines ersten Strahlengangs (61) gerichtet zu den besagten matrixförmigen optischen Modulationsmitteln (30);
- ein zweiter Lichtstrahl (92), der durch den besagten Strahlteiler (60) abgelenkt oder bzw. transmittiert wird, entlang eines zweiten Strahlengangs (62), stammend von einer Reflexion des besagten ersten Lichtstrahls (91) an den besagten matrixförmigen optischen Modulationsmitteln (30);
- einen nicht planaren Spiegel (70), der so positioniert ist, dass er den besagten zweiten Lichtstrahl (92), stammend von einer Reflexion an den besagten matrixförmigen Phasenmodulationsmitteln (30), in einen dritten Lichtstrahl (93) reflektiert, zurück zu dem besagten Strahlteiler (60) entlang eines dritten Strahlengangs (63), so dass der dritte Lichtstrahl durch den Strahlteiler reflektiert oder transmittiert wird, um einen vierten Lichtstrahl (94) zu bilden, gerichtet zur Schlierenlinse (20).

2. Messsystem (200) nach dem vorstehenden Anspruch, **dadurch gekennzeichnet, dass** die besagten matrixförmigen optischen Modulationsmittel (30) in einer Modulationsebene (195) positioniert sind, die optisch konjugiert zu der besagten Quellenebene (105) ist, wobei der besagte Beleuchtungsstrahl (9) auf der Ebene der besagten matrixförmigen optischen Modulationsmitteln (30) in Reflexion räumlich begrenzt wird durch mindestens eines der folgenden Mittel:
- ein zweites optisches Auswahlelement (12) mit einer zweiten Öffnung (120), positioniert in der besagten Quellenebene (105);
- ein drittes optisches Auswahlelement (36) mit einer dritten Öffnung (360), positioniert in der besagten Modulationsebene (195);
- eine Quelle (10), umfassend eine räumlich begrenzte Lichtquelle (15), bevorzugt wobei die besagte Lichtquelle (15) eine Matrix von lichtemittierenden Dioden ist.

3. Messsystem (200) nach einem der vorstehenden Ansprüche, **dadurch gekennzeichnet, dass** das besagte erste optische Auswahlelement (16) in einer objektseitigen Brennebene (185) des besagten ersten konvergenten optischen Elements (18) positioniert ist.

4. Messsystem (200) nach einem der vorstehenden Ansprüche, **dadurch gekennzeichnet, dass** es weiter umfasst:
- ein drittes optisches Auswahlelement (36) mit einer dritten Öffnung (360), wobei das besagte dritte optische Auswahlelement (36) auf der Ebene der besagten matrixförmigen optischen Modulationsmittel (30) positioniert ist.

5. Messsystem (200) nach einem der vorstehenden Ansprüche, **dadurch gekennzeichnet, dass**:
- das besagte Beleuchtungsmodul (19) ein 4F-Beleuchtungsmodul ist, umfassend:
- ein zweites konvergentes optisches Element (14), positioniert zwischen der besagten Quelle (10) und dem besagten ersten optischen Auswahlelement (16), und so konfiguriert, dass:
- seine objektseitige Brennebene mit der besagten Quellenebene (105) zusammenfällt;
- seine bildseitige Brennebene mit der besagten objektseitigen Brennebene (185) des besagten ersten konvergenten optischen Elements (18) zusammenfällt, positionniert zwischen den besagten ersten (18) und zweiten (14) konvergenten optischen Elementen,
wobei die besagte Bildebene des Beleuchtungsmoduls (19) mit der bildseitigen Brennebene des ersten konvergenten optischen Elements (18) zusammenfällt.

6. Messsystem (200) nach einem der vorstehenden Ansprüche, **dadurch gekennzeichnet, dass** die besagten matrixförmigen optischen Modulationsmittel (30) matrixförmige Phasenmodulationsmittel (30) sind, bevorzugt umfassend eine Matrix von Flüssigkristallen auf Silizium.

7. Messsystem (200) nach einem der vorstehenden Ansprüche, **dadurch gekennzeichnet, dass**
die besagten ersten (61) und zweiten (62) Strahlengänge parallel sind, wenn der besagte erste Lichtstrahl (91) durch den besagten Strahlteiler (60) abgelenkt wird.

8. Messsystem (200) nach einem der vorstehenden Ansprüche 1 bis 6, **dadurch gekennzeichnet, dass**
die besagten ersten (61) und zweiten (62) Strahlengänge senkrecht sind, wenn der besagte erste Lichtstrahl (91) durch den besagten Strahlteiler (60) transmittiert wird.

9. Messsystem (200) gemäß einem der beiden vorstehenden Ansprüche, wenn es von Anspruch 6 abhängt, **dadurch gekennzeichnet, dass**:
- die besagten Strahlteiler (60) einen polarisierenden Strahlteiler (60) umfassen, bevorzugt einen polarisierenden Strahlteilerwürfel (60),
der besagte Beleuchtungsstrahl (9), stammend von dem besagten Beleuchtungsmodul (19), entlang einer optischen Achse A gerichtet ist, wobei der besagte polarisierende Strahlteiler (60) bevorzugt dazu konfiguriert ist, dass die optische Achse A senkrecht zu dem besagten zweiten Strahlengang (62) ist.

10. Messsystem (200) nach einem der vorstehenden Ansprüche, **dadurch gekennzeichnet, dass** die besagte Quelle (10) eine Lichtquelle (15) und ein zweites Auswahlmittel (12) mit einer zweiten Öffnung (120) umfasst, um einen von der besagten Lichtquelle (15) stammenden Lichtstrahl räumlich zu begrenzen, wobei das besagte zweite Auswahlmittel (12) bevorzugt in der besagten Quellenebene (105) positioniert ist.

11. Messsystem (200) nach einem der vorstehenden Ansprüche, **dadurch gekennzeichnet, dass**:
- die besagte erste Öffnung (16) eine erste Öffnungsfläche (160) von weniger als 50 mm², bevorzugt weniger als 25 mm² und noch bevorzugter weniger als 10 mm² aufweist,
wobei die besagte erste Öffnung (160) bevorzugt auf der besagten optischen Achse A zentriert ist.

12. Messsystem (200) nach einem der vorstehenden Ansprüche, **dadurch gekennzeichnet, dass** die besagte Schlierenlinse (20) zwischen der besagten Projektionsvorrichtung (100) und den besagten Abbildungsmitteln (40) oder zwischen den besagten matrixförmigen Phasenmodulationsmitteln (30) und den besagten Abbildungsmitteln (40) positioniert ist.

13. Messsystem (200) nach einem der vorstehenden Ansprüche, **dadurch gekennzeichnet, dass** die besagten Abbildungsmittel (40):
- ein erstes (420) und ein zweites (400) konvergentes optisches Abbildungselement umfassen, die dazu konfiguriert sind, dass ein bildseitiger Brennpunkt des einen mit einem objektseitigen Brennpunkt des anderen in einem zweiten Konvergenzpunkt zusammenfällt, welcher in einer zweiten Fokussierebene (405) positioniert ist, die zwischen den besagten ersten (420) und zweiten (400) konvergenten optischen Abbildungselementen liegt;
- bevorzugt weiter ein viertes optisches Auswahlelement (45) mit einer vierten Öffnung umfassen, welche den besagten zweiten Konvergenzpunkt umgibt;
wobei die besagten Abbildungsmittel (40) geeignet sind, ein Bild der besagten Probe (2) aus dem besagten Inspektionslichtstrahl (99) nach dessen Wechselwirkung mit der besagten Probe (2) auf den besagten matrixförmigen Erfassungsmitteln (50) zu bilden.

14. Messsystem nach einem der vorstehenden Ansprüche, **dadurch gekennzeichnet, dass** die besagten Abbildungsmittel (40) Abbildungsmittel 4F sind, so dass:
- das besagte erste konvergente optische Element (420) zwischen der besagten Schlierenlinse (20) und dem besagten vierten Auswahlmittel (45) positioniert ist, so dass seine objektseitige Brennebene mit einer Ebene der besagten Probe (2) zusammenfällt und,
- das besagte zweite konvergente optische Element (400) zwischen dem besagten vierten Auswahlmittel (45) und den besagten matrixförmigen Erfassungsmitteln (50) positioniert ist, so dass seine bildseitige Brennebene mit den besagten matrixförmigen Erfassungsmitteln (50) zusammenfällt.

## Claims

1. System (200) for measuring a sample (2) by deflectometry, comprising:
- a source (10) for generating a light beam in a source plane (105);
- an illumination module (19) comprising:
- a first converging optical element (18);
- a first selection optical element (16) having a first aperture (160), said first selection optical element (16) being positioned between said source plane (105) and said first converging optical element (18);
said illumination module (19) being configured to generate an illumination beam (9) from said light beam of said source (10);
- matrix optical modulation means (30) in reflection, for forming a pattern (7) from said illumination beam (9);
said first aperture (160) being configured to control angles of incidence of said illumination beam (9) on said matrix optical modulation means (30) in reflection;
- a Schlieren lens (20);
said measuring system (200) being configured such that said pattern (7) is adapted to illuminate said Schlieren lens (20) so as to obtain an angle-intensity encoding of said pattern (7) into an inspection light beam (99);
- imaging means (40) for forming an image of said sample (2) after interaction of said inspection light beam (99) with said sample (2), said Schlieren lens (20) being positioned between said matrix optical modulation means (30) and said imaging means (40) along an optical path of a light beam generated by said source (10) when the latter is activated;
- matrix detection means (50) for detecting said image of said sample (2) formed by said imaging means (40);
- beam splitting means (60) configured so as to obtain from said illumination beam (9) resulting from the illumination module (19):
- a first light beam (91) transmitted or deflected by said beam splitter (60) along a first optical path (61) directed toward said matrix optical modulation means (30);
- a second light beam (92) deflected or respectively transmitted by said beam splitter (60) along a second optical path (62) resulting from a reflection of said first light beam (91) transmitted or, respectively, deflected by said matrix optical modulation means (30);
- a non-planar mirror (70) positioned so as to reflect said second light beam (92), resulting from a reflection on said matrix phase modulation means (30), into a third light beam (93) reflected to said beam splitter (60) along a third optical path (63), such that the third light beam is reflected or transmitted by the beam splitter to form a fourth light beam (94) directed toward the Schlieren lens (20).

2. Measuring system (200) according to the preceding claim, **characterized in that** said matrix optical modulation means (30) are positioned in a modulation plane (195) optically conjugate to said source plane (105), said illumination beam (9) being spatially limited at the level of said matrix optical modulation means (30) in reflection by at least one of the following means:
- a second selection optical element (12) which has a second aperture (120) and is positioned in said source plane (105);
- a third selection optical element (36) which has a third aperture (360) and is positioned in said modulation plane (195);
- a source (10) comprising a spatially limited light source (15), said light source (15) preferably being a light-emitting diode matrix.

3. Measuring system (200) according to any one of the preceding claims, **characterized in that** said first selection optical element (16) is positioned in an object focal plane (185) of said first converging optical element (18).

4. Measuring system (200) according to any one of the preceding claims, **characterized in that** it further comprises:
- a third selection optical element (36) having a third aperture (360), said third selection optical element (36) being positioned at the level of said matrix optical modulation means (30).

5. Measuring system (200) according to any one of the preceding claims, **characterized in that**:
- said illumination module (19) is a 4F illumination module comprising:
- a second converging optical element (14) positioned between said source (10) and said first selection optical element (16), and configured such that:
- its object focal plane coincides with said source plane (105);
- its image focal plane coincides with said object focal plane (185) of said first converging optical element (18) positioned between said first (18) and second (14) converging optical elements,
said image plane of the illumination module (19) coinciding with the image focal plane of the first converging optical element (18).

6. Measuring system (200) according to any one of the preceding claims, **characterized in that** said matrix optical modulation means (30) are matrix phase modulation means (30), preferably comprising a liquid-crystal-on-silicon matrix.

7. Measuring system (200) according to any one of the preceding claims, **characterized in that**
said first (61) and second (62) optical paths are parallel when said first light beam (91) is deflected by said beam splitter (60).

8. Measuring system (200) according to any one of claims 1 to 6, **characterized in that**
said first (61) and second (62) optical paths are perpendicular when said first light beam (91) is transmitted by said beam splitter (60).

9. Measuring system (200) according to either of the two preceding claims when dependent on claim 6, **characterized in that**:
- the beam splitting means (60) comprise a polarizing beam splitter (60), preferably a polarizing beam-splitter cube (60),
said illumination beam (9) resulting from said illumination module (19) is directed along an optical axis A, said polarizing beam splitter (60) preferably being configured such that the optical axis A is perpendicular to said second optical path (62).

10. Measuring system (200) according to any one of the preceding claims, **characterized in that** said source (10) comprises a light source (15) and a second selection means (12) having a second aperture (120) for spatially limiting a light beam resulting from said light source (15), said second selection means (12) being preferably positioned in said source plane (105).

11. Measuring system (200) according to any one of the preceding claims, **characterized in that**:
- said first aperture (16) has a first aperture surface area (160) of less than 50 mm², preferably less than 25 mm² and even more preferably less than 10 mm²,
said first aperture (160) preferably being centered on said optical axis A.

12. Measuring system (200) according to any one of the preceding claims, **characterized in that** said Schlieren lens (20) is positioned between said projection device (100) and said imaging means (40) or between said matrix phase modulation means (30) and said imaging means (40).

13. Measuring system (200) according to any one of the preceding claims, **characterized in that** said imaging means (40):
- comprise a first (420) and a second (400) converging imaging optical element which are configured such that an image focus of one coincides with an object focus of the other at a second convergence point located in a second focusing plane (405) positioned between said first (420) and second (400) converging imaging optical elements;
- preferably further comprise a fourth selection optical element (45) having a fourth aperture surrounding said second convergence point,
said imaging means (40) being adapted to form an image of said sample (2) from said inspection beam (99) having interacted with said sample (2) on said matrix detection means (50).

14. Measuring system according to any one of the preceding claims, **characterized in that** said imaging means (40) are 4F imaging means such that:
- said first converging optical element (420) is positioned between said Schlieren lens (20) and said fourth selection means (45), so that its object focal plane coincides with a plane of said sample (2) and,
- said second converging optical element (400) is positioned between said fourth selection means (45) and said matrix detection means (50), so that its image focal plane coincides with said matrix detection means (50).
